(19) Europäisches Patentamt
European Patent Office
Office européen des brevets

(11) **EP 0 893 479 B1**

(12) **EUROPÄISCHE PATENTSCHRIFT**

(45) Veröffentlichungstag und Bekanntmachung des Hinweises auf die Patenterteilung:
**21.02.2001 Patentblatt 2001/08**

(21) Anmeldenummer: **98113486.9**

(22) Anmeldetag: **20.07.1998**

(51) Int Cl.[7]: **C08L 77/06**
// (C08L77/06, 23:02),
(C08L77/06, 25:10),
(C08L77/06, 51:04),
(C08L77/06, 55:02),
(C08L77/06, 71:10)

(54) **Statistische Copolyamide enthaltende Formmassen, Verfahren zu ihrer Herstellung und ihre Verwendung**

Moulding copositions containing statistical copolyamides, process for their preparation and their use

Compositions à mouler contenant des copolyamides statistiques, leur procédé de préparation et leur utilisation

(84) Benannte Vertragsstaaten:
**BE DE FR GB IT NL SE**

(30) Priorität: **21.07.1997 DE 19731230**

(43) Veröffentlichungstag der Anmeldung:
**27.01.1999 Patentblatt 1999/04**

(73) Patentinhaber: **BASF AKTIENGESELLSCHAFT**
**67056 Ludwigshafen (DE)**

(72) Erfinder:
- **Gottschalk, Axel, Dr.**
  **67435 Neustadt (DE)**
- **Grutke, Stefan, Dr.**
  **67434 Neustadt (DE)**
- **Pipper, Gunter, Dr.**
  **67098 Bad Dürkheim (DE)**
- **Wolf, Peter, Dr.**
  **67281 Kirchheim (DE)**
- **Weber, Martin, Dr.**
  **67487 Maikammer (DE)**

(74) Vertreter: **Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(56) Entgegenhaltungen:
**EP-A- 0 333 408** **EP-A- 0 722 986**
**JP-A- 7 189 029**

- **PATENT ABSTRACTS OF JAPAN vol. 018, no. 377 (C-1225), 15. Juli 1994 & JP 06 100775 A (ASAHI CHEM IND CO LTD), 12. April 1994**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft statistische Copolyamide enthaltende Formmassen, Verfahren zu ihrer Herstellung, ihre Verwendung zur Herstellung von Formkörpern, Fasern oder Folien und daraus hergestellte Formkörper, Fasern oder Folien.

Eine Vielzahl von Polyamidformmassen, insbesondere in Form von Polymer-blends, sind bekannt. Dabei wird die Zusammensetzung der Formmassen dem gewünschten Eigenschaftsprofil der Formmassen angepaßt. Insbesondere bei glasfaserverstärkten Polyamidformmassen sollen neben vorteilhaften mechanischen Eigenschaften auch eine glänzende und glatte Oberfläche bei daraus hergestellten Formkörpern zugänglich sein. Die verarbeitungstechnischen Eigenschaften der Formmassen sollen dabei nicht beeinträchtigt sein. Bei glasfaserverstärkten Spritzgußprodukten ist dabei jedoch häufig die Oberfläche der Formteile durch Unebenheiten, Unregelmäßigkeiten und dem sogenannten Glasfasereffekt matt und rauh. Bei Sichtformteilen, die oft für das Design eines Körpers relevant sind, ist dieser Effekt jedoch im allgemeinen unerwünscht.

In der DE-C-43 21 247 sind Polyamid-Harzmassen beschrieben, die neben Hexamethylenadipinsäureamid-Einheiten aus Adipinsäure und Hexamethylendiamin auch 10 bis 25 Gew.-% eines Hexamethylenisophthalamids aus Isophthalsäure und Hexamethylendiamin enthalten. Zudem enthalten die Harzmassen 5 bis 70 Gew.-% mindestens eines anorganischen Füllstoffs, insbesondere Glasfasern. Die Formmassen sollen homogen sein, gute Verformungseigenschaften und einen hohen Oberflächenglanz aufweisen, bei gleichzeitig hoher Festigkeit, Steifheit und Dimensionsstabilität. Insbesondere wird ein hoher Oberflächenglanz der Formmassen angestrebt.

In JP-A 80 062 958 sind Gemische aus Polyamiden und 5 bis 50 Gew.-% anorganischen Faserverstärkungsmaterialien beschrieben. Die Polyamide können dabei 30 bis 100 Gew.-% Hexamethylenisophthalamid-Einheiten aufweisen. Insbesondere werden Hexamethylenisophthalamid-Polymere, Hexamethylenisophthalamid/Hexamethylenterephthalamid-Copolymere und Hexamethylenisophthalamid/Caproamid-Copolymere beschrieben.

In JP-A 93/339 494 sind Harzzusammensetzungen mit hoher Festigkeit und Steifheit, niedriger Wasserabsorption und gutem Aussehen beschrieben. Sie enthalten beispielsweise 20 Gew.-% eines halbaromatischen Polyamidharzes aus 50 Gew.-% Hexamethylenadipamid-Einheiten aus Adipinsäure und Hexamethylendiamin, 30 Gew.-% Hexamethylenisophthalamid-Einheiten aus Isophthalsäure und Hexamethylendiamin und 20 Gew.-% Hexamethylenterephthalamid-Einheiten aus Terephthalsäure und Hexamethylendiamin neben 80 Gew.-% eines Polyphenylenetherharzes.

In J.S. Ridgway, J. Polym. Sc. Vol. 8, Teil A-1, (1970) Seiten 3089 bis 3111 sind Struktur-Eigenschaftsbeziehungen von Nylon-66-Copolyamiden beschrieben, die Ringstrukturen enthalten. Die Ringstruktur wurde dabei mit der Glasübergangstemperatur und dem Schmelzpunkt korreliert. Es werden Copolyamide beschrieben, die auf Adipinsäure und Hexamethylendiamin basieren und 10 bis 30 mol-% Isophthalsäure-Einheiten enthalten.

In der WO 91/13194 sind verbesserte Ausgangsmaterialien zur Herstellung von Nylongarnen beschrieben. Es werden beispielsweise statistische Copolymere aus 87 Gew.-% Adipinsäure/Hexamethylendiamin und 13 Gew.-% Isophthalsäure/Hexamethylendiamin beziehungsweise 92 Gew.-% Adipinsäure/Hexamethylendiamin und 8 Gew.-% Isophthalsäure/Hexamethylendiamin beschrieben. Aus ihnen lassen sich gute Garne zur Herstellung von Teppichen erhalten.

Aus der EP-A-0 654 505 sind hochmolekulare thermoplastische Formmassen bekannt, die erhältlich sind durch Einmischen eines Polyphenylenethers neben anderen Zusatzstoffen und Verarbeitungshilfsmitteln in eine Schmelze eines niedermolekularen Polyamids und anschließende Nachkondensation in fester Phase. Als Polyamide kamen Polyamid 66 mit einer Viskositätszahl im Bereich von 60 bis 283, wie auch ein Polyamid 6/6T mit einer Viskositätszahl von 125 zum Einsatz.

EP-A-0 678 555 betrifft thermoplastische Formmassen, die ein teilaromatisches, teilkristallines Copolyamid und einen Polyphenylenether enthalten. Das Copolyamid ist aufgebaut aus 30 bis 44 Mol-% Terephthalsäure, 6 bis 20 Mol-% Isophthalsäure, 43 bis 49,5 Mol-% Hexamethylendiamin und 0,5 bis 7 Mol-% aliphatischen cyclischen Diaminen.

EP-A-0 694 583 betrifft thermoplastische Formmassen aus einem teilkristallinen, teilaromatischen Polyamid, Polyolefinhomo- oder -copolymerisaten und Haftvermittlern. Das Copolyamid ist aufgebaut aus 30. bis 44 Mol-% Terephthalsäure, 6 bis 20 Mol-% Isophthalsäure, 43 bis 49 Mol-% Hexamethylendiamin und 0,5 bis 7 Mol-% aliphatischen cyclischen Diaminen.

EP-A-0 722 986 betrifft thermoplastische Formmassen aus einem teilaromatischen, teilkristallinen Copolyamid, ASA- oder ABS- oder SAN-Polymeren oder $C_{1-18}$-Alkylestern der (Meth)acrylsäure und einem Haftvermittler. Das Copolyamid ist wiederum aus 30 bis 44 Mol-% Terephthalsäure, 6 bis 20 Mol-% Isophthalsäure, 43 bis 49,5 Mol-% Hexamethylendiamin und 0,5 bis 7 Mol-% aliphatischen cyclischen Diaminen aufgebaut.

DE-A-2 122 735 betrifft ein thermoplastisches Polymergemisch aus einem aromatischen Polysulfon und einem Polyamid. Es wird herausgestellt, daß die Gemische wünschenswerte Kombinationen physikalischer Eigenschaften aufweisen, obwohl unterschiedliche polymere Substanzen gewöhnlich im Gemisch mechanisch schwach sind.

EP-A-0 477 757 betrifft Polymer-Blends aus Polyarylethersulfonen und Polyamiden, wobei die Polyamide

wenigstens 50 Gew.-% an 1,6-Hexamethylenterephthalamid-Wiederholeinheiten aufweisen. Die Blends sollen neben guten thermischen Eigenschaften und Haftungseigenschaften der einzelnen Phasen auch eine erwünschte Kombination an mechanischen Eigenschaften aufweisen.

DE-A-41 21 705 betrifft thermoplastische Formmassen auf der Basis von Polyarylenethern und teilaromatischen Copolyamiden. Es wird herausgestellt, daß derartige Mischungen hervorragende Steifigkeit und hohe Wärmeformbeständigkeit zeigen.

DE-A-44 29 107 betrifft Formmassen aus Polyarylenethern und Copolyamiden, die aufgebaut sind aus Terephthalsäure, Isophthalsäure, Hexamethylendiamin und aliphatischen cyclischen Diaminen. Die Formmassen sollen neben hohen Steifigkeiten und Wärmeformbeständigkeiten gute Verarbeitungsstabilitäten aufweisen.

Die bekannten Formmassen, insbesondere Polyamid-Blends weisen nicht für alle Anwendungen ausreichende Oberflächeneigenschaften, verbunden mit guten mechanischen Eigenschaften, auf.

Aufgabe der vorliegenden Erfindung ist daher die Bereitstellung von Copolyamide enthaltenden Formmassen, insbesondere Copolyamid-Blends, die eine sehr gute Oberflächenqualität neben sehr guten mechanischen Eigenschaften aufweisen und die Nachteile der bekannten Formmassen vermeiden. Sie sollen insbesondere eine hohe Reißdehnung und eine hohes E-Modul aufweisen. Die mechanischen Eigenschaften sollen auch nach einer Wärmebehandlung erhalten bleiben.

Die Aufgabe wird erfindungsgemäß gelöst durch Bereitstellung einer Formmasse, umfassend die Komponenten A, B und gegebenenfalls die Komponenten C bis E, deren Gesamtgewicht 100 Gew.-% ergibt:

- a: 5 bis 95 Gew.-% eines statistischen Copolyamids als Komponente A aus
  - a1: 95,1 bis 99,9 Gew.-% Komponente A1 aus äquimolaren Mengen mindestens eines linearen aliphatischen Diamins und mindestens einer linearen aliphatischen Dicarbonsäure
  - a2: 0,1 bis 4,9 Gew.-% Komponente A2 aus äquimolaren Mengen mindestens eines linearen aliphatischen Diamins und Isophthalsäure
- b: 5 bis 95 Gew.-% einer von Komponente A unterschiedlichen Copolymer-Komponente B, ausgewählt aus:
  - b1: Komponente B1 aus mindestens einem gegebenenfalls modifizierten Polyphenylenether, oder
  - b2: Komponente B2 aus 60 bis 99 Gew.-% mindestens eines Polyolefinhomo- oder -copolymerisats als Komponente B21 und 1 bis 40 Gew.-% mindestens eines modifizierten Polyolefinhomo- oder -copolymerisats als Komponente B22, oder
  - b3: Komponente B3 aus 70 bis 100 Gew.-% mindestens eines SAN-, ABS- oder ASA-Polymerisats als Komponente B31 und 0 bis 30 Gew.-% mindestens eines modifizierten SAN-, ABS- oder ASA-Polymerisats als Komponente B32
- c: 0 bis 20 Gew.-% mindestens eines Schlagzähmodifiers als Komponente C
- d: 0 bis 50 Gew.-% mindestens eines Füllstoffes als Komponente D
- e: 0 bis 20 Gew.-% üblicher Zusatzstoffe als Komponente E.

Aus den erfindungsgemäßen Formmassen sind Formkörper herstellbar, die sehr gute verarbeitungstechnische und mechanische Eigenschaften auch nach einer fortgesetzten Wärmebehandlung aufweisen und in Verbindung mit Füllstoffen, wie Glasfasern, insbesondere in glasfaserverstärkten Spritzgußprodukten, eine sehr glatte Oberfläche mit hohem Glanz aufweisen.

Es wurde gefunden, daß Formmassen, in denen die eingesetzten Copolyamide, die beispielsweise neben einer Komponente A1 aus äquimolaren Mengen von Hexamethylendiamin und Adipinsäure 0,1 bis 4,9 Gew.-% einer Komponente A2 aus äquimolaren Mengen von beispielsweise Hexamethylendiamin und Isophthalsäure aufweisen, diese Eigenschaften besitzen. Insbesondere gegenüber Formmassen, die einen höheren Anteil der Komponente A2 aufweisen (vergleiche DE-C-43 21 247) sind die mechanischen Eigenschaften und Oberflächeneigenschaften nach fortgesetzter Wärmeeinwirkung verbessert.

Nachstehend werden die Komponenten der erfindungsgemäßen Formmassen beschrieben. Dabei ergibt die Gesamtmenge beziehungsweise das Gesamtgewicht der Komponenten A, B und gegebenenfalls C bis E 100 Gew.-%.

<u>Komponente A</u>

Komponente A liegt in den erfindungsgemäßen Formmassen in einer Menge von 5 bis 95, vorzugsweise 15 bis 70, insbesondere 30 bis 50 Gew.-% vor.

Komponente A ist ein statistisches Copolyamid aus 95,1 bis 99,0, vorzugsweise 95,1 bis 98,5, insbesondere

95,3 bis 97,5, speziell 95,5 bis 97,0 Gew.-% der Komponente A1 und 0,1 bis 4,9, vorzugsweise 1,5 bis 4,9, insbesondere 2,5 bis 4,7, speziell 3,0 bis 4,5 Gew.-% der Komponente A2.

Komponente A1

Komponente A1 besteht aus äquimolaren Mengen mindestens eines linearen aliphatischen Diamins und mindestens einer linearen aliphatischen Dicarbonsäure. Als lineare aliphatische Diamine werden vorzugsweise Diamine der allgemeinen Formel $H_2N\text{-}(CH_2\text{-})_xNH_2$ eingesetzt, in denen x eine ganze Zahl im Bereich von 4 bis 20, vorzugsweise 4 bis 12, insbesondere 4 bis 8 ist. Besonders bevorzugt wird Hexamethylendiamin eingesetzt.

Als lineare aliphatische Dicarbonsäuren werden vorzugsweise Dicarbonsäuren der allgemeinen Formel $HOOC\text{-}(CH_2\text{-})_yCOOH$ eingesetzt, in denen y eine ganze Zahl im Bereich von 4 bis 20, vorzugsweise 4 bis 12, insbesondere 4 bis 8 ist. Besonders bevorzugt wird Adipinsäure eingesetzt.

Es können Gemische linearer aliphatischer Diamine eingesetzt werden. Vorzugsweise wird jedoch nur ein lineares aliphatisches Diamin eingesetzt. Ebenso können Gemische linearer aliphatischer Dicarbonsäuren eingesetzt werden. Vorzugsweise wird ebenfalls nur eine lineare aliphatische Dicarbonsäure eingesetzt.

Komponente A2

Komponente A2 besteht aus äquimolaren Mengen mindestens eines linearen aliphatischen Diamins und Isophthalsäure. Das lineare aliphatische Diamin kann dabei wie vorstehend für Komponente A1 angegeben aufgebaut sein. Vorzugsweise entspricht das lineare aliphatische Diamin dem linearen aliphatischen Diamin der Komponente A1. Besonders bevorzugt wird Hexamethylendiamin eingesetzt. Es können Gemische mehrerer linearer aliphatischer Diamine eingesetzt werden, vorzugsweise wird jedoch nur ein lineares aliphatisches Diamin eingesetzt.

Die Viskositätszahl der Komponente A liegt vorzugsweise im Bereich von 70 bis 300, besonders bevorzugt 100 bis 250, insbesondere 100 bis 150. Die Viskositätszahl wird dabei als 0,5 Gew.-%ige Lösung in 96 Gew.-%iger Schwefelsäure bei 25°C bestimmt.

Komponente B

Der Anteil der Komponente B in den erfindungsgemäßen Formmassen beträgt 5 bis 95, vorzugsweise 15 bis 55, besonders bevorzugt 25 bis 35 Gew.-%. Liegt Komponente D in einer Menge von 5 bis 50 Gew.-% vor, so beträgt der Anteil der Komponente B allgemein 5 bis 90 Gew.-%.

Liegt Komponente C in einer Menge von 1 bis 20 Gew.-% vor, so beträgt der Anteil der Komponente B allgemein 5 bis 94 Gew.-%, liegen Komponente D in einer Menge von 5 bis 50 Gew.-% und Komponente C in einer Menge von 1 bis 20 Gew.-% vor, so beträgt der Anteil der Komponente B allgemein 5 bis 93%.

Komponente B ist ausgewählt aus:

Komponente B1 aus mindestens einem, gegebenenfalls modifizierten Polyphenylenether, oder

Komponente B2 aus 60 bis 99, vorzugsweise 70 bis 90, besonders bevorzugt 75 bis 85 Gew.-%, mindestens eines Polyolefinhomo- oder -copolymerisats als Komponente B21 und 1 bis 40, vorzugsweise 10 bis 30, besonders bevorzugt 15 bis 25 Gew.-% mindestens eines modifizierten Polyolefinhomo- oder -copolymerisats als Komponente B22, oder

Komponente B3 aus 70 bis 100, vorzugsweise 75 bis 100, besonders bevorzugt 80 bis 100 Gew.-% mindestens eines SAN, ABS- oder ASA-Polymerisats als Komponente B31 und 0 bis 30, vorzugsweise 0 bis 25, besonders bevorzugt 0 bis 20 Gew.-% mindestens eines modifizierten SAN-, ABS- oder ASA-Polymerisats als Komponente B32.

Komponente B1

Als Polyarylenether kommen beispielsweise Gemische aus 0 bis 50 Gew.-% mindestens eines Anhydridterminierten Polyarylenethers B1a und 50 bis 100 Gew.-% mindestens eines von Komponente B1a verschiedenen Polyarylenethers B1b in Betracht.

B1a weisen wiederkehrenden Einheiten der allgemeinen Formel (III) auf

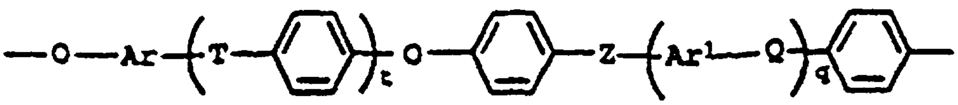

(III)

in denen t und q jeweils eine ganze Zahl 0, 1, 2 oder 3 bedeuten können,

T, Q und Z jeweils eine chemische Bindung oder eine Gruppe ausgewählt aus -O-, -S-, $-SO_2-$, S=O, C=O, -N=N-, $-R^aC=CR^b-$ und $-CR^cR^d-$ sein können, mit der Maßgabe, daß mindestens eine der Gruppen T, Q oder Z - $-SO_2-$ oder C=O bedeutet und wenn t und q O sind, Z $-SO_2-$ oder C=O ist,

$R^a$ und $R^b$ jeweils ein Wasserstoffatom oder eine $C_1$- bis $c_{10}$-Alkylgruppe bedeuten,

$R^c$ und $R^d$ jeweils ein Wasserstoffatom, eine $C_1$- bis $C_{10}$-Alkyl-, $C_1$- bis $C_{10}$-Alkoxy- oder $C_5$- bis $C_{18}$-Arylgruppe, wobei die vorgenannten Gruppen jeweils mit Fluor- und/oder Chloratomen substituiert sein können, zusammen mit dem C-Atom, an das sie gebunden sind, eine $C_4$- bis $C_7$-Cycloalkylgruppe bilden, die mit einer oder mehreren $C_1$- bis $C_6$-Alkylgruppen substituiert sein kann, bedeuten,

Ar und $Ar^1$ für $C_6$- bis $C_{18}$-Arylengruppen stehen, wobei diese unsubstituiert sein können oder mit $C_1$- bis $C_{10}$-Alkyl, $C_6$- bis $C_{18}$-Aryl, $C_1$- bis $C_{10}$-Alkoxy oder Halogen substituiert sein können

und Anhydridendgruppen der Formel IV

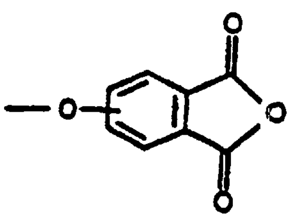

(IV)

Die Polyarylenether B1b weisen Endgruppen, die sich von denen der Polyarylenether der allgemeinen Formel V unterscheiden, auf

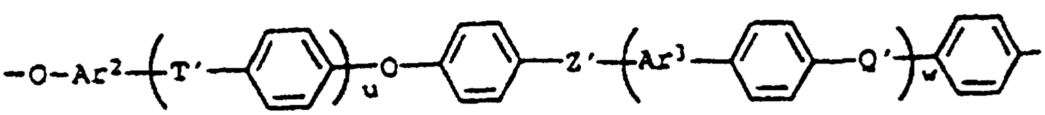

(V)

in denen u und w die gleiche Bedeutung wie t und q haben, T', Q', und Z' die gleiche Bedeutung wie T, Q und Z haben und $Ar^2$ und $Ar^3$ die gleiche Bedeutung wie Ar und $Ar^1$ haben.

Die Polyarylenether B1a werden hergestellt, indem man Polyarylenether mit wiederkehrenden Einheiten der allgemeinen Formel (III) und Hydroxyendgruppen mit Phthalsäureanhydriden der allgemeinen Formel VI

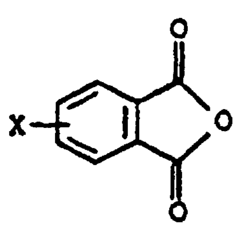

(VI)

worin X Fluor, Chlor, Brom oder Jod bedeutet, in einem Lösungsmittel in Gegenwart von Kaliumfluorid umsetzt.

Die in der allgemeinen Formel III genannten Variablen t und q können jeweils den Wert 0, 1, 2 oder 3 annehmen. T, Q und Z können unabhängig voneinander gleich oder verschieden sein. Sie können eine chemische Bindung oder eine Gruppe ausgewählt aus -O-, $-SO_2-$, -S-, C=O, -N=N- und S=O sein. Daneben können T, Q und Z auch für eine Gruppe der allgemeinen Formel $-R^aC=CR^b-$ oder $-CR^cR^d-$ stehen, wobei $R^a$ und $R^b$ jeweils Wasserstoff oder $C_1$ bis $C_{10}$-Alkylgruppen, $R^c$ und $R^d$ jeweils Wasserstoff, $C_1$- bis $C_{10}$-Alkyl- wie Methyl, Ethyl, n-Propyl, i-Propyl, t-Butyl, n-Hexyl, $C_1$- bis $C_{10}$-Alkoxy wie Methoxy, Ethoxy, n-Propoxy, i-Propoxy, n-Butoxy oder $C_6$- bis $C_{18}$-Arylgruppen wie Phenyl oder Naphthyl bedeuten. $R^c$ und $R^d$ können auch zusammen mit dem Kohlenstoffatom, an das sie gebunden sind, zu einem Cycloalkylring mit 4 bis 7 Kohlenstoffaromen verknüpft sein. Bevorzugt werden darunter Cyclopentyl oder Cyclohexyl. Die Cycloalkylringe können unsubstituiert sein oder mit einem oder mehreren, bevorzugt zwei oder drei $C_1$- bis $C_6$-Alkylgruppen substituiert sein. Zu den bevorzugten Substituenten der Cycloalkylringe zählt Methyl. Bevorzugt werden Polyarylenether eingesetzt, in denen T, Q und Z -O-, $-SO_2-$, C=O, eine chemische Bindung oder eine Gruppe der Formel $-CR^cR^d$ bedeuten. Zu den bevorzugten Resten $R^c$ und $R^d$ zählen Wasserstoff und Methyl. Von den Gruppen T, Q und Z bedeutet mindestens eine $-SO_2-$ oder C=O. Sind die beiden Variablen t und q O, dann ist Z entweder $-SO_2-$ oder C=O, bevorzugt $-SO_2-$. Ar und $Ar^1$ stehen für $C_6$- bis $C_{18}$-Arylengruppen, wie 1,5-Naphthylen, 1,6-Naphthylen, 2,7-Naphthylen, 1,5-Anthrylen, 9,10-Anthrylen, 2,6-Anthrylen, 2,7-Anthrylen oder Biphenylen, insbesondere Phenylen. Vorzugsweise sind diese Arylengruppen nicht substituiert. Sie können jedoch einen oder mehrere, beispielsweise zwei Substituenten haben. Als Substituenten kommen $C_1$- bis $C_{10}$-Alkyl- wie Methyl, Ethyl, n-Propyl, i-Propyl, t-Butyl, n-Hexyl, $C_6$- bis $C_{18}$Aryl wie Phenyl oder Naphthyl, $C_1$- bis $C_{10}$-Alkoxyreste wie Methoxy, Ethoxy, n-Propoxy, i-Propoxy, n-Butoxy und Halogenatome in Betracht. Zu den davon bevorzugten Substituenten gehören Methyl, Phenyl, Methoxy und Chlor.

Einige geeignete wiederkehrende Einheiten sind im folgenden aufgeführt:

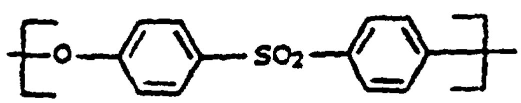

$(III_1)$

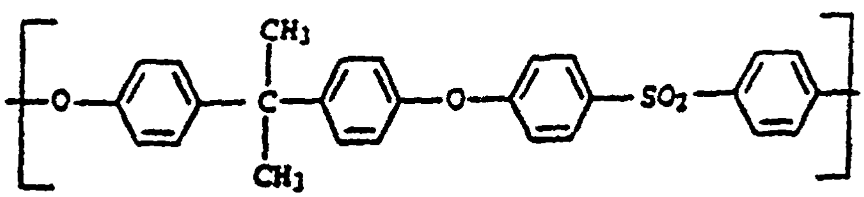

$(III_2)$

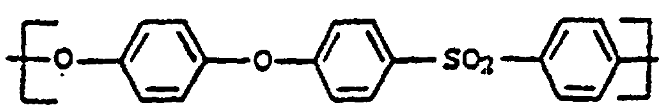

$(III_3)$

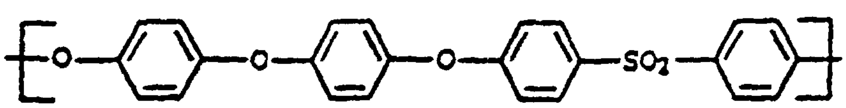

$(III_4)$

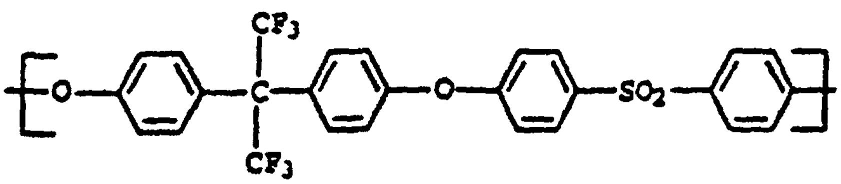

$(III_5)$

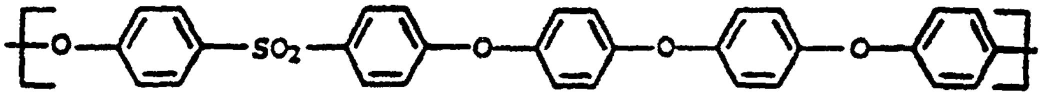
(III$_{6}$)

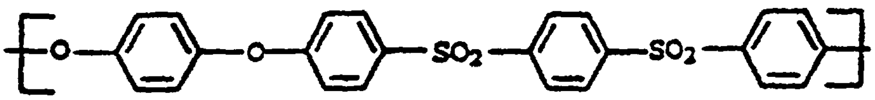
(III$_{7}$)

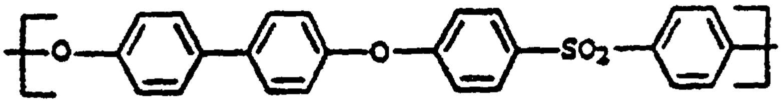
(III$_{8}$)

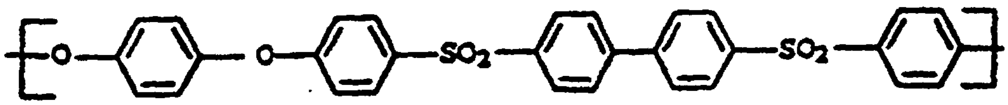
(III$_{9}$)

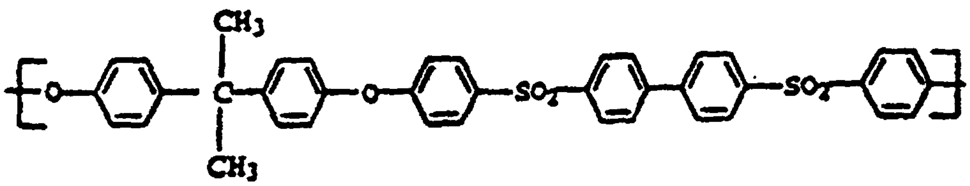
(III$_{10}$)

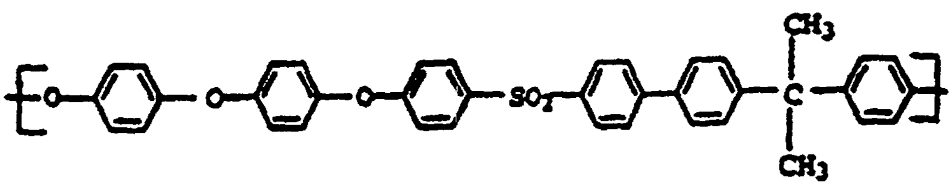
(III$_{11}$)

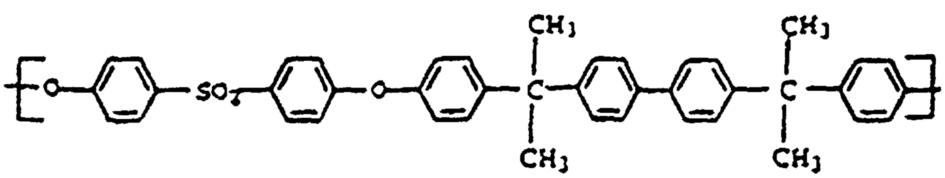
(III$_{12}$)

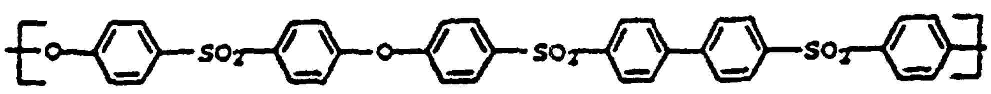
(III$_{13}$)

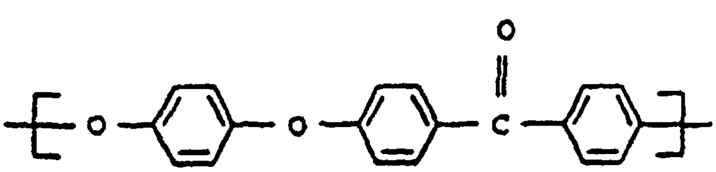
(III$_{14}$)

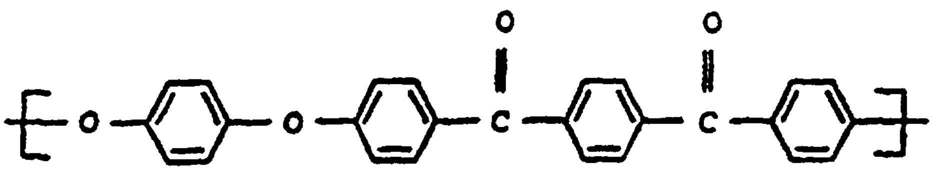

$(III_{15})$

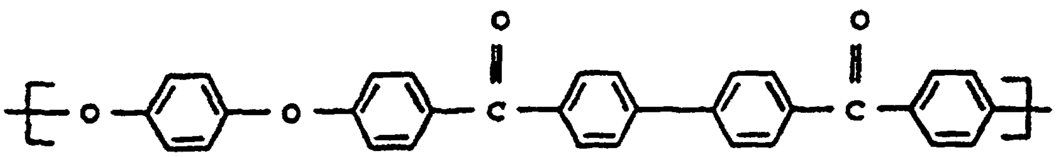

$(III_{16})$

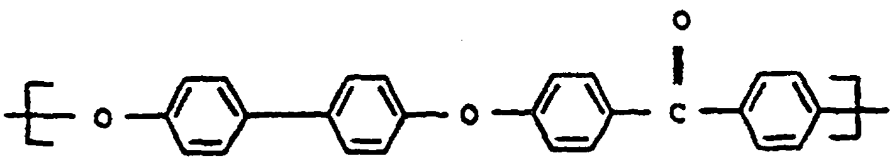

$(III_{17})$

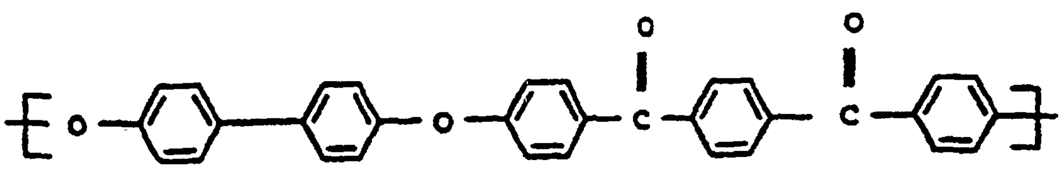

$(III_{18})$

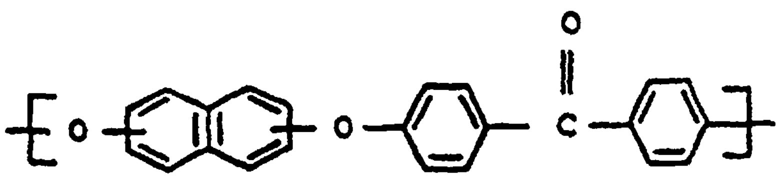

$(III_{19})$

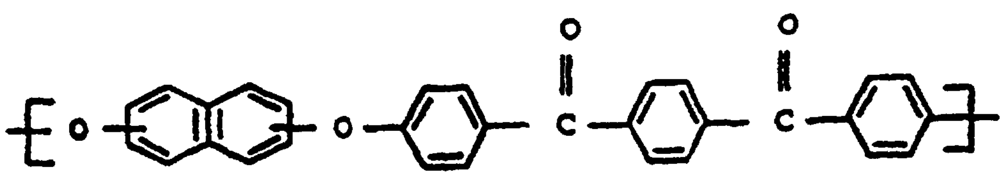

$(III_{20})$

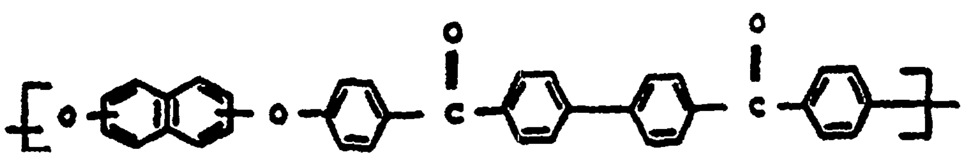

$(III_{21})$

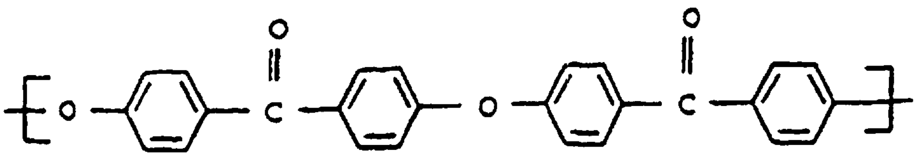

(III22)

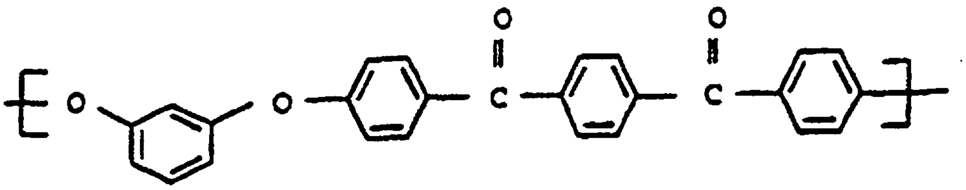

(III23)

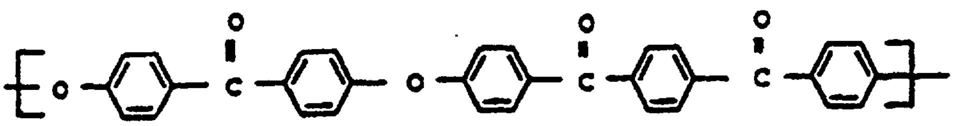

(III24)

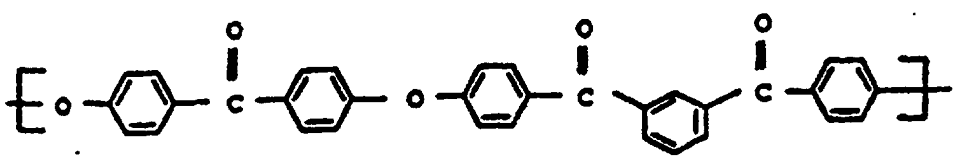

(III25)

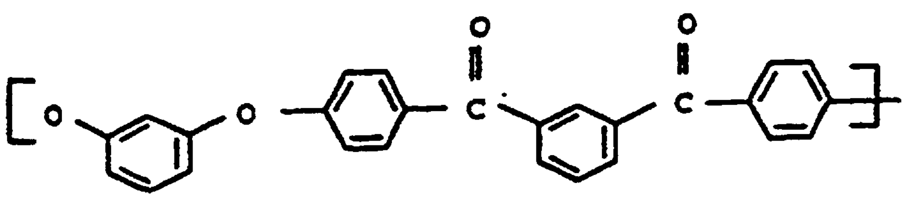

(III26)

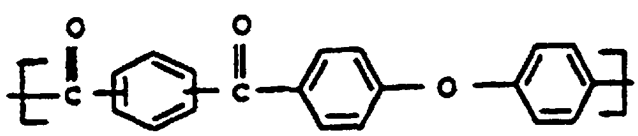

(III27)

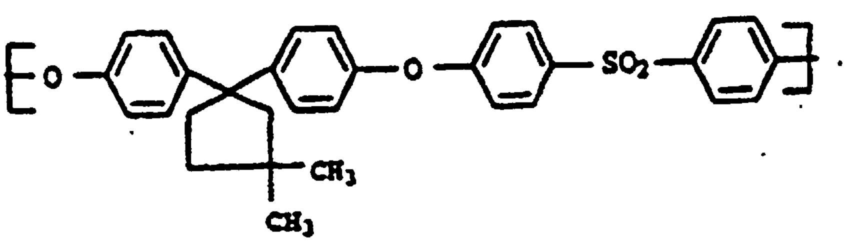

(III28)

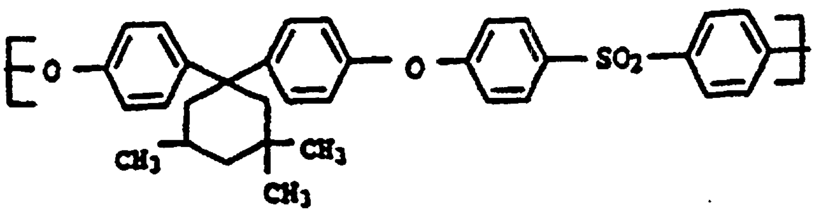

(III29)

Ganz besonders bevorzugt werden Polyarylenether mit wiederkehrenden Einheiten ($III_1$), ($III_2$), ($III_8$), ($III_{24}$). Dazu zählen beispielsweise Polyarylenether Bla und B1b mit 0 bis 100 Mol-% wiederkehrenden Einheiten ($III_1$) und und 0 bis 100 Mol-% wiederkehrenden Einheiten ($III_2$).

Die Polyarylenether können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Die Molekulargewichte (Zahlenmittel) der Blöcke beziehungsweise der Pfropfarme in den Copolymeren liegen in der Regel im Bereich von 1000 bis 30 000 g/mol. Die Blöcke unterschiedlicher Struktur können alternierend oder statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Im allgemeinen weisen die Polyarylenether mittlere Molekulargewichte $M_n$ (Zahlenmittel) im Bereich von 5000 bis 60 000 g/mol und relative Viskositäten von 0,20 bis 0,95 dl/g auf. Die relativen Viskositäten werden je nach Löslichkeit der Polyarylenether entweder in 1 Gew.-%iger N-Methylpyrrolidon-Lösung, in Mischungen aus Phenol und Dichlorbenzol oder in 96%iger Schwefelsäure bei jeweils 20°C beziehungsweise 25°C gemessen.

Polyarylenether mit wiederkehrenden Einheiten III sind an sich bekannt und können nach bekannten Methoden hergestellt werden.

Sie entstehen zum Beispiel durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden. Der DE-A-38 43 438 ist beispielsweise eine ausführliche Zusammenstellung geeigneter Monomerer zu entnehmen. Geeignete Verfahren werden unter anderem in der US 3,441,538, 4,108,837 und der DE-A-27 38 962 beschrieben. Polyarylenether, die Carbonylfunktionen enthalten, sind auch durch elektrophile (Friedel-Crafts)- Polykondensation zugänglich, wie unter anderem in der WO 84/03892 beschrieben. Bei der elektrophilen Polykondensation werden zur Bildung der Carbonylbrücken entweder Dicarbonsäurechloride oder Phosgen mit Aromaten, welche zwei- durch elektrophile Substituenten austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert. Bevorzugte Verfahrensbedingungen zur Synthese von Polyarylenethern sind beispielsweise in den EP-A-0 113 112 und 0 135 130 beschrieben. Besonders geeignet ist die Umsetzung der Monomeren in aprotischen Lösungsmitteln, insbesondere N-Methylpyrrolidon, in Gegenwart von wasserfreiem Alkalicarbonat, insbesondere Kaliumcarbonat. Die Monomeren in der Schmelze umzusetzen, hat sich in vielen Fällen ebenso als vorteilhaft erwiesen.

Polyarylenether mit wiederkehrenden Einheiten III und Hydroxyendgruppen können beispielsweise durch geeignete Wahl des molaren Verhältnisses zwischen Dihydroxy- und Dichlormonomeren hergestellt werden (siehe zum Beispiel J.E. McGrath et al. Polym. Eng. Scie. 17, 647 (1977); H.-G. Elias "Makromoleküle" 4. Aufl., Seiten 490-493, (1981), Hüthig & Wepf-Verlag, Basel).

Bevorzugt werden zur Herstellung von Komponente B1a solche verwendet, die 0,02 bis 2 Gew.-% Hydroxyendgruppen aufweisen. Ganz besonders werden solche bevorzugt, die 0,1 bis 1,5 Gew.-% Hydroxyendgruppen haben.

Erfindungsgemäß werden diese Polyarylenether mit Phthalsäureanhydriden der allgemeinen Formel (VI) umgesetzt. Darunter sind die Chlorphthalsäureanhydride und die Fluorphthalsäureanhydride bevorzugt. Besonders bevorzugt werden 3-Fluorphthalsäureanhydrid oder 3-Chlorphthalsäureanhydrid verwendet. Es kann aber auch von Vorteil sein, eine Mischung aus unterschiedlichen Phthalsäureanhydriden (IV), beispielsweise eine Mischung aus 3-Fluorphthalsäureanhydrid und 3-Chlorphthalsäureanhydrid einzusetzen. Dabei ist es möglich, die unterschiedlichsten Phthalsäureanhydride VI gleichzeitig mit den Polyarylenethern umzusetzen. Es ist aber auch möglich, diese nacheinander, beispielsweise zunächst 3-Fluorphthalsäureanhydrid und anschließend 3-Chlorphthalsäureanhydrid, umzusetzen.

Die Umsetzung der hydroxyterminierten Polyarylenether mit den Phthalsäureanhydriden (VI) zu den Polyarylenethern B1a findet erfindungsgemäß in einem Lösungsmittel, insbesondere einem Lösungsmittel, das sowohl die Polyarylenether, die Phthalsäureanhydride VI als auch Kaliumfluorid hinreichend gut löst, statt. Als Beispiele geeigneter organischer Lösungsmittel sind aliphatische oder aromatische Sulfoxide oder Sulfone wie Dimethylsulfoxid, Dimethylsulfon, 1,1-Dioxothiolan oder Diphenylsulfon, worunter Dimethylsulfoxid und Diphenylsulfon bevorzugt zu nennen ist. Darüber hinaus kommen N-Cyclohexylpyrrolidon, N,N-Dimethylacetamid, Dimethylformamid und N-Methylpyrrolidon in Betracht. Besonders bevorzugt wird N-Methylpyrrolidon eingesetzt. Für die Umsetzungen sind im allgemeinen erhöhte Temperaturen erforderlich. In der Regel findet die Reaktion unterhalb einer Temperatur von 60°C nur langsam statt. Meist sind Temperaturen von 100°C oder darüber erforderlich. Im allgemeinen finden die Umsetzungen in einem Temperaturbereich von 120 bis 250°C statt. Höhere Temperaturen als 230°C sind meist nicht erforderlich.

Die zur Umsetzung erforderlichen Reaktionszeiten betragen im allgemeinen von 0,1 bis 5 Stunden.

Erfindungsgemäß wird die Umsetzung in Gegenwart von Kaliumfluorid durchgeführt. Im allgemeinen wird das Kaliumfluorid in stoichiometrischen Mengen zu Phthalsäureanhydrid VI eingesetzt. Die Menge an Kaliumfluorid kann aber auch darüber liegen und beispeilsweise bis zu 10 Mol pro Mol Phthalsäureanhydrid VI betragen. Sie kann auch geringfügig weniger sein. Meist ist der Umsatz nicht mehr vollständig, wenn die Menge an Kaliumfluorid weniger als 1 Mol pro Mol Phthalsäureanhydrid VI beträgt. In der Regel beträgt das molare Verhältnis von Kaliumfluorid zu Phthalsäureanhydrid von 1 bis 7, bevorzugt von 1,1 bis 6.

Die Reaktion kann auch in Gegenwart von Kaliumcarbonat durchgeführt werden. Im allgemeinen wird von 0,05 bis 10 Mol Kaliumcarbonat pro Mol Kaliumfluorid verwendet. Die Menge an Kaliumcarbonat kann jedoch auch kleiner sein, beispielsweise von 0,05 bis 9 Mol Kaliumcarbonat pro Mol Kaliumfluorid betragen. In der Regel bringt es keine Vorteile mehr, wenn Kaliumcarbonat in Mengen von mehr als 15 Mol pro. Mol Kaliumfluorid zugegeben wird. Meist wird die Umsetzung in Gegenwart von 0,05 bis 7 Kaliumcarbonat pro Mol Kaliumfluorid durchgeführt. Die Umsetzung der Polyarylenether mit den Phthalsäureanhydriden kann sowohl mit gereinigten und isolierten Polyarylenethern vorgenommen werden. Es ist aber auch möglich, diese Umsetzung direkt an die Herstellung der Polyarylenether anzuschließen, ohne diese vorher zu reinigen oder zu isolieren. Das Reaktionsprodukt wird vorzugsweise durch Ausfällen in einem Nichtlösungsmittel, beispielsweise einem niedermolekularen Alkohol wie Methanol, Ethanol, Propanol oder Isopropanol oder auch Wasser sowie Mischungen derselben gewonnen. Es ist aber auch möglich, das Reaktionslösungsmittel aus dem Reaktionsprodukt, beispielsweise im Entgasungsextruder oder Dünnschichtverdampfer, zu entfernen und so das Reaktionsprodukt zu isolieren.

Der Anteil an Anhydridengruppen im Polyarylenether B1a kann durch die bekannten Methoden der allgemeinen organischen Analytik wie Titration, IR-, UV- und NMR-Spektroskopie bestimmt werden.

Neben den Polyarylenethern B1a enthalten die Formmassen auch Polyarylenether B1b, deren Endgruppen sich von denen der Polyarylenethern B1a unterscheiden und die wiederkehrenden Einheiten der allgemeinen Formel V enthalten.

Dabei haben u und w die gleiche Bedeutung wie t und q. u und w können, brauchen aber nicht mit t und q identisch zu sein, das heißt u und w können unabhängig von t und q gleich oder verschieden von diesen sein. T', Q' und Z' haben die gleiche Bedeutung wie T, Q und Z und können, brauchen aber nicht mit T, Q und Z identisch zu sein, das heißt T', Q' und Z' können unabhängig von T, Q und Z gleich oder verschieden von T, Q und Z sein. $Ar^2$ und $A^3$ können gleich oder verschieden von Ar und $Ar^1$ sein, das heißt $Ar^2$ und $Ar^3$ können, brauchen aber nicht mit Ar und $Ar^1$ identisch zu sein und haben die gleiche Bedeutung wie Ar und $Ar^1$.

Als Komponente B1b können auch Polyarylenethersegmente enthaltende Copolymere eingesetzt werden.

Die Polyarylenether B1b können beispielsweise Halogen-, Methoxy-, Hydroxy-, Phenoxy-, Benzyloxy- oder Aminoendgruppen enthalten. Bevorzugt werden Polyarylenether B mit Halogen- und/oder Methoxyendgruppen verwendet.

Diese Polyarylenether B sind, wie vorstehend angegeben, bekannt oder nach bekannten Methoden erhältlich.

Als Polyarylenether weiterhin geeignete Polyphenylenether B1c sind an sich bekannt und werden vorzugsweise durch oxidative Kupplung von in o-Position disubstituierten Phenolen hergestellt.

Als Beispiele für Substituenten sind Halogenatome, wie Chlor oder Brom, und Alkylreste mit 1 bis 5 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome, wie Chlor oder Brom, oder durch eine Hydroxylgruppe substituiert sein. Weitere Beispiele möglicher Substituenten sind Alkoxyreste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole, wie Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, das heißt ganz oder weitestgehend in diesen Polymeren löslich sind (vergleiche A. Noshay, Block Copolymers, Seite 8 bis 10, Academic Press, 1977 und O. Olabisi, Polymer-Polymer Miscibility, 1979, Seite 117 bis 189).

Beispiele für Polyphenylenether sind Poly(2,6-dilauryl-1,4-phenylenether), Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-di-chlor-1,4-phenylenether), Poly(2-methyl-6-phenyl-1,4-phenylenether), Poly-(2,6-dibenzyl-1,4-phenylenether), Poly(2-ethoxi-1,4-phenylenether), Poly-(2-chlor-1,4-phenylenether), Poly(2,5-dibrom-1,4-phenylenether). Bevorzugt werden Polyphenylenether eingesetzt, bei denen

die Substituenten Alkylreste mit 1 bis 4 Kohlenstoffatomen sind, wie Poly(2,6-dimethyl-1,4-phenylenether), Poly (2,6-diethyl-1,4-phenylenether), Poly(2-methyl-6-ethyl-1,4-phenylenether), Poly(2-methyl-6-propyl-1,4-phenylenether), Poly(2,6-di-propyl-1,4-phenylenether) und Poly(2-ethyl-6-propyl-1,4-phenylenether). Besonders bevorzugt ist der Poly(2,6-dimethyl-1,4-phenylenether).

Weiterhin sind Pfropfcopolymere aus Polyphenylenether und vinylaromatischen Polymeren wie Styrol, a-Methylstyrol, Vinyltoluol und Chlorstyrol geeignet.

Bevorzugt werden fünktionalisierte oder modifizierte Polyphenylenether eingesetzt, wie sie zum Beispiel aus WO 86/02086, WO 87/00540, EP-A-0 222 246, EP-A-0 223 116 und EP-A-0 254 048 bekannt sind.

Üblicherweise wird bei deren Herstellung ein Polyphenylenether B11 durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine bessere Verträglichkeit mit dem Polyamid erreicht wird.

Bevorzugt ist die Komponente B1c aufgebaut durch Umsetzung von

b11: 70 bis 99,95 Gew.-% mindestens eines unmodifizierten Polyphenylenethers als Komponente B11,
b12: 0 bis 29,95 Gew.-% mindestens eines Polymers aus vinylaromatischen Monomeren als Komponente B12,
b13: 0,05 bis 30 Gew.-% mindestens eines mit Komponenten B11 und B12 umsetzbaren Monomeren, das durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam- oder Halogenbenzylgruppe modifiziert ist, als Komponente B13,
b14: 0 bis 5 Gew.-% mindestens eines Radikalstarters als Komponente B14,

wobei die Summen der Mengen der Komponenten B11, B13 und gegebenenfalls B12 und/oder B14 100 Gew.-% ergibt.

Die Modifizierung wird im allgemeinen durch Umsetzung eines Polyphenylenethers B11 mit einem Modifiziermittel, das mindestens eine der oben genannten Gruppen enthält, in Lösung (WO 86/2086), in wäßriger Dispersion, in einem Gasphasenverfahren (EP-A-0 025 200) oder in der Schmelze gegebenenfalls in Gegenwart von geeigneten vinylaromatischen Polymeren oder Schlagzähmodifiern durchgeführt, wobei wahlweise Radikalstarter zugegeben sein können.

Bevorzugt wird in den erfindungsgemäßen Formmassen als Komponente B1c ein modifizierter Polyphenylenether eingesetzt, der durch Umsetzung von

b11: 70 bis 99,95, vorzugsweise 75 bis 95 Gew.-%, eines unmodifizierten Polyphenylenethers als Komponente B11,
b12: 0 bis 29,95, vorzugsweise 4,89 bis 20 Gew.-%, eines Polymers aus vinylaromatischen Monomeren als Komponente B12,
b13: 0,05 bis 30, vorzugsweise 0,1 bis 5 Gew.-%, mindestens einer Verbindung aus der Gruppe gebildet aus

B131: $\alpha,\beta$-ungesättigten Dicarbonylverbindungen,
B132: Amid-Gruppen enthaltenden Monomeren mit einer polymerisierbaren Doppelbindung und
B133: Lactam-Gruppen enthaltenden Monomeren mit einer polymerisierbaren Doppelbindung,

als Komponente B13, und
b14: 0 bis 5, vorzugsweise 0,01 bis 0,09 Gew.-%, eines Radikalstarters als Komponente B14,

wobei sich die Gewichtsprozente auf die Summe von B11 bis B14 beziehen, in geeigneten Misch- und Knetaggregaten wie Zweischneckenextrudern erhältlich ist. Die Verweilzeit liegt dabei vorzugsweise im Bereich von 0,5 bis 15 Minuten bei Temperaturen von 240 bis 375°C.

Das vinylaromatische Polymer B12 ist vorzugsweise mit dem eingesetzten Polyphenylenether B11 verträglich.

Die Molekulargewichte dieser an sich bekannten und im Handel erhältlichen Polymeren liegen im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere B 12 sind der bereits erwähnten Monographie von Olabisi, Seite 224 bis 230 und 245 zu entnehmen. Nur stellvertretend seien hier vinylaromatische Polymere aus Styrol, Chlorstyrol, a-Methylstyrol und p-Methylstyrol genannt; in untergeordneten Anteilen (vorzugsweise nicht mehr als 20, insbesondere nicht mehr als 8 Gew.-%), können auch Comonomere wie (Meth) acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Bereitstellung erfolgt vorzugsweise nach dem in der EP-A-0 302 485 beschriebenen Verfahren.

Geeignete Modifiziermittel B13 sind beispielsweise Maleinsäure, Methylmaleinsäure, Itaconsäure, Tetrahydrophthalsäure, deren Anhydride und Imide, Fumarsäure, die Mono- und Diester dieser Säuren, zum Beispiel von $C_1$- und $C_2$-$C_8$-Alkanolen, (Monomere B131), die Mono- oder Diamide dieser Säuren wie N-Phenylmaleinimid (Monomere B132) und Maleinhydrazid. Andere geeignete Modifizierungsmittel sind das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure. Als Monomere B133 seien beispielsweise N-Vinylpyrrolidon und (Meth)acryloylcaprolactam genannt.

Als Radikalstarter B14 seien genannt:

Di-(2,4-dichlorbenzoyl)peroxid, tert.-Butylperoxid, Di-(3,5,5-trimethylhexanoyl)peroxid, Dilauroylperoxid, Didecanoylperoxid, Dipropionylperoxid, Dibenzoylperoxid, tert.-Butylperoxy-2-ethylhexanoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexanoat, tert.-Butylperacetat, tert.-Butylperbenzoat, 4,4-Di-tert.-butylperoxyvaleriansäure-butylester, 2,2-Di-tert.-butylperoxybutan, Dicumylbperoxid, tert.-Butylcumylperoxid, 1,3-Di(tert.-butylperoxyisopropyl)benzol und Di-tert.-butylperoxid. Genannt seien ebenfalls organische Hydroperoxide, wie Diisopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

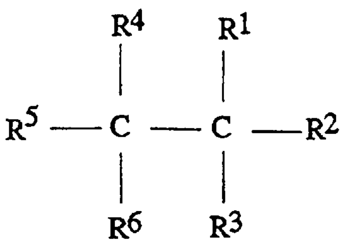

wobei $R^1$ bis $R^6$ Alkylgruppen mit 1 bis 8 C-Atomen, Alkoxygruppen mit 1 bis 8 C-Atomen, Arylgruppen, wie Phenyl, Naphtyl oder 5- oder 6-gliedrige Heterocyclen mit einem p-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beipsiele sind 2,3-Dimethyl-2,3-diphenylbutan, 3,4-Dimethyl-3,4-diphenylhexan und 2,2,3,3-Tetraphenylbutan.

Komponente B2

Komponente B2 ist aus Komponenten B21 und B22 aufgebaut.

Komponente B21

Als Komponente B21 enthalten die Komponenten B2 der erfindungsgemäßen Formmassen 60 bis 99, bevorzugt von 70 bis 90 und insbesondere 75 bis 85 Gew.-% eines Polyolefinhomo- oder -copolymerisates oder deren Mischungen.

Die Komponente B21 weist im allgemeinen einen Schmelzpunkt > 90, bevorzugt > 125°C und insbesondere > 160°C auf.

Geeignete Polyolefinhomopolymerisate sind zum Beispiel Polyethylen, Polypropylen und Polybuten, wobei Polypropylen bevorzugt ist.

Geeignete Polyethylene sind Polyethylene sehr niedriger (LLD-PE), niedriger (LD-PE), mittlerer (MD-PE) und hoher Dichte (HD-PE). Es handelt sich dabei um kurz- oder langkettenverzweigte oder lineare Polyethylene, die in einem Hochdruckprozeß in Gegenwart von Radikalstartern (LD/PE) oder in einem Niederdruckprozeß in Gegenwart von sogenannten komplexen Initiatoren zum Beispiel Phillips- oder Ziegler-Natta Katalysatoren (LLD-PE, MD-PE) oder Metallocenen hergestellt werden. Die Kurzkettenverzweigungen im LLD-PE beziehungsweise MD-PE werden durch Copolymerisation mit $\alpha$-Olefinen (zum Beispiel Buten, Hexen oder Octen) eingeführt.

LLD/PE weist im allgemeinen eine Dichte von 0,9 bis 0,93 $g/cm^3$ und eine Schmelztemperatur (bestimmt mittels Differentialthermoanalyse) von 120 bis 130°C auf, LD-PE eine Dichte von 0,915 bis 0,935 $c/cm^3$ und eine Schmelztemperatur von 105 bis 115°C, MD-PE eine Dichte von 0,93 bis 0,94 $g/cm^3$ und eine Schmelztemperatur von 120 bis 130°C und HD-PE eine Dichte von 0,94 bis 0,97 $g/cm^3$ und eine Schmelztemperatur von 128 bis 136°C.

Die Fließfähigkeit gemessen als Schmelzindex MVI beträgt allgemein 0,05 bis 35 g/10 min. Der Schmelzflußindex entspricht dabei der Menge an Polymerisat, die innerhalb von 10 Minuten aus der nach DIN 53 735 genormten Prüfvorrichtung bei einer Temperatur von 190°C und 2,16 kg Belastung ausgepreßt wird.

Bevorzugt enthalten die erfindungsgemäßen Formmassen Polypropylen als Komponente B21.

Geeignete Polypropylene sind dem Fachmann bekannt und werden beispielsweise im Kunststoffhandbuch Band IV, Polyolefine, Carl Hanser Verlag München beschrieben.

Der Meltvolumenindex MVI nach DIN 53 735 beträgt im allgemeinen 0,3 bis 80 g/10 min, vorzugsweise 0,5 bis 35 g/10 min bei 230°C und 2,16 kg Belastung.

Die Herstellung derartiger Polypropylene erfolgt üblicherweise durch Niederdruckpolymerisation mit metallhaltigen Katalysatoren, beispielsweise mit Hilfe von titan- und aluminiumhaltigen Ziegler-Katalysatoren, oder im Falle des Polyethylens auch durch Phillips-Katalysatoren auf der Basis von chromhaltigen Verbindungen. Die Polymerisationsreaktion kann dabei mit den in der Technik üblichen Reaktoren, sowohl in der Gasphase, in Lösung oder auch in einer Aufschlämmung durchgeführt werden.

Das Polyethylen oder Polypropylen kann bei der Herstellung der erfindungsgemäßen Polymermischung sowohl als Grieß als auch als Granulat verwendet werden. Es können auch Mischungen des Polyethylens mit Polypropylen eingesetzt werden, wobei das Mischungsverhältnis beliebig ist.

Darüber hinaus eignen sich als Komponente B21 Copolymerisate von Ethylen mit α-Olefinen wie Propylen, Buten, Hexen, Penten, Hepten und Octen oder mit nicht konjugierten Dienen wie Norbornadien und Dicyclopentadien. Es sollen unter Copolymerisaten B21 sowohl statistische als auch Blockcopolymere verstanden werden.

Statistische Copolymere werden üblicherweise durch Polymerisation einer Mischung verschiedener Monomeren, Blockcopolymere durch nacheinanderfolgende Polymerisation verschiedener Monomere erhalten.

<u>Komponente B22</u>

Als Komponente B22 enthalten die Komponenten B2 der erfindungsgemäßen Formmassen 1 bis 40, vorzugsweise 10 bis 30 und insbesondere 15 bis 25 Gew.-% eines Haftvermittlers, welcher eine ausreichende Affinität sowohl zur Komponente A als auch zur Komponente B21 aufweist. Entsprechend wird die Grenzflächenspannung zwischen A und B21 reduziert, wobei eine bessere Phasendispergierung und Phasenhaftung erzielt wird.

Geeignete Polymere als Haftvermittler B22 sind die unter B21 beschriebenen Polyolefinhomo- und Copolymerisate, welche 0,1 bis 20, vorzugsweise 0,2 bis 10 und insbesondere 0,2 bis 5 Gew.-% (bezogen auf 100 Gew.-% der Komponente B22) an funktionellen Monomeren enthalten.

Unter funktionellen Monomeren sollen Carbonsäure-, Säureanhydrid-, Säureamid-, Säureimid-, Carbonsäureester-, Amino-, Hydroxyl-, Epoxid-, Oxazolin-, Urethan-, Harnstoff- oder Lactamgruppen enthaltende Monomere verstanden werden, die eine reaktive Doppelbindung aufweisen.

Beispiele hierfür sind Methacrylsäure, Maleinsäure, Maleinsäureanhydrid, Fumarsäure, Itaconsäure sowie die Alkylester der vorstehenden Säure beziehungsweise deren Amide, Maleinsäureamid, Allylamin, Allylalkohol, Glycidylmethacrylat, Vinyl- und Isopropenyloxazolin und Methacryloylcaprolactam.

Man kann die funktionellen Monomeren entweder durch Copolymerisation oder Pfropfung in die Polymerkette einführen. Die Pfropfung kann entweder in Lösung oder in der Schmelze erfolgen, wobei gegebenenfalls Radikalstarter wie Peroxide, Hydroperoxide, Perester und Percarbonate mitverwendet werden können.

Derartige Haftvermittler sind allgemein im Handel erhältlich (Polybond® von BP Chemical, Exxelor® von Exxon, Hostamont® von Hoechst, Admer® von Mitsui, Orevac® von Atochem, Epolene® von Eastman, Hostaprime® von Hoechst, Kraton® von Shell und Fasaband® von DuPont).

<u>Komponente B3</u>

Komponente B3 ist aufgebaut aus Komponenten B31 und B32.

<u>Komponente B31</u>

Als Komponente B31 enthalten die Komponenten B3 der erfindungsgemäßen Formmassen 70 bis 100, vorzugsweise 75 bis 100 und insbesondere 80 bis 100 Gew.-% eines ASA-(Acryl-Styrol-Acrylester) oder ABS-(Acrylnitril-Butadien-Styrol) oder SAN-(Styrol-Acrylnitril)-Polymerisates oder eines Polymeren aus $C_1$ bis $C_{18}$-Alkylestern der (Meth)acrylsäure oder Mischungen derartiger Polymere.

Das Mischungsverhältnis der Polymeren ist innerhalb weiter Grenzen variierbar; für den Fall der Mischung von (Meth)acrylaten mit ASA, ABS oder oder SAN ist jedoch zu beachten, daß diese nur bis zu einem Acrylnitrilgehalt bis zu 27 Gew.-% (bis 250°C bezogen auf die Verarbeitungstemperatur), bis zu 25 Gew.-% (bis 300°C), bezogen auf den Gesamtgehalt an zum Beispiel ABS, mischbar sind.

Bevorzugte ASA-Polymerisate sind aufgebaut aus einer Weich- oder Kautschukphase aus einem Pfropfpolymerisat aus:

B311 50 bis 90 Gew.-% einer Pfropfgrundlage auf Basis von

B3111 95 bis 99,9 Gew.-% eines $C_2$-$C_{10}$-Alkylacrylats und

B3112 0,1 bis 5 Gew.-% eines difunktionellen Monomeren mit zwei olefinischen, nicht konjugierten Doppelbindungen, und

B312 10 bis 50 Gew.-% einer Pfropfauflage aus

B3121 20 bis 90 Gew.-% Styrol oder substituierten Styrolen der nachstehenden allgemeinen Formel (I) oder deren Mischungen, und

B3122 10 bis 80 Gew.-% Acrylnitril, Methacrylnitril, Acrylsäureestern oder Methacrylsäureestern oder deren Mischungen,

in Mischung mit einer Hartmatrix auf Basis eines SAN-Copolymeren B313 aus:

B3131 50 bis 90, vorzugsweise 55 bis 90 und insbesondere 65 bis 85 Gew.-% Styrol und/oder substituierten Styrolen der nachstehenden allgemeinen Formel (I) und

B3132 10 bis 50, vorzugsweise 10 bis 45 und insbesondere 15 bis 35 Gew.-% Acrylnitril und/oder Methacrylnitril.

Komponente B311

Bei der Komponente B311 handelt es sich um ein Elastomeres, welches eine Glasübergangstemperatur von unter -20, insbesondere unter -30°C aufweist.

Für die Herstellung des Elastomeren werden als Hauptmonomere B3111 Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht B3111 und B3112 eines polyfunktionellen Monomeren mit mindestens zwei olefinischen, nicht konjugierten Doppelbindungen eingesetzt. Von diesen werden difunktionelle Verbindungen, das heißt mit zwei nicht-konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage B311 sind an sich bekannt und zum Beispiel in der DE-B 1 260 135 beschrieben. Entsprechende Produkte sind auch kommerziell erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, das heißt der Quotient

$$Q = \frac{d_{90} - d_{10}}{d_{50}}$$

ist vorzugsweise kleiner als 0,5, insbesondere kleiner als 0,35.

Der Anteil der Pfropfgrundlage B311 am Pfropfpolymerisat aus B311 und B312 beträgt 50 bis 90, vorzugsweise 55 bis 85 und insbesondere 60 bis 80 Gew.-%, bezogen auf das Gesamtgewicht von B311 und B312.

Komponente B312

Auf die Pfropfgrundlage B311 ist eine Pfropfhülle B312 aufgepfropft, die durch Copolymerisation von

B3121 20 bis 90, vorzugsweise 30 bis 90 und insbesondere 30 bis 80 Gew.-% Styrol oder substituierten Styrolen der allgemeinen Formel (I)

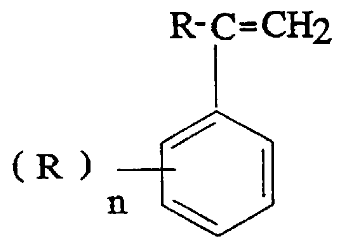

(I)

wobei R Alkylreste mit 1 bis 8 C-Atomen, Wasserstoffatome oder Halogenatome und R' Alkylreste mit 1 bis 8 C-Atomen oder Halogenatome darstellen und n den Wert 0, 1, 2 oder 3 hat,
und

B3122 10 bis 80, vorzugsweise 10 bis 70 und insbesondere 20 bis 70 Gew.-% Acrylnitril, Methacrylnitril, Acrylsäureestern oder Methacrylsäureestern oder deren Mischungen erhältlich ist.

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Bevorzugte Acryl- beziehungsweise Methacrylsäureester sind solche, deren Homopolymere beziehungsweise Copolymerisate mit den anderen Monomeren der Komponente B3122 Glasübergangstemperaturen von mehr als 20°C aufweisen; prinzipiell können jedoch auch andere Acrylsäureester eingesetzt werden, vorzugsweise in solchen Mengen, daß sich insgesamt für die Komponente B312 eine Glasübergangstemperatur $T_g$ oberhalb 20°C ergibt.

Besonders bevorzugt werden Ester der Acryl- oder Methacrylsäure mit $C_1$-$C_8$-Alkoholen und Epoxygruppen enthaltende Ester wie Glycidylacrylat beziehungsweise Glycidylmethacrylat. Als ganz besonders bevorzugte Beispiele seien Methylmethacrylat, tert.-Butylmethacrylat, Glycidylmethacrylat und n-Butylacrylat genannt, wobei letzterer aufgrund seiner Eigenschaft, Polymerisate mit sehr niedriger $T_g$ zu bilden, vorzugsweise in nicht zu hohem Anteil eingesetzt wird.

Die Pfropfhülle B312 kann in einem oder in mehreren, zum Beispiel zwei oder drei, Verfahrensschritten hergestellt werden, die Bruttozusammensetzung bleibt davon unberührt.

Vorzugsweise wird die Pfropfhülle in Emulsion hergestellt, wie dies zum Beispiel in den DE-C 12 60 135, DE-A 32 27 555, DE-A 31 49 357 und DE-A 34 14 118 beschrieben ist.

Je nach den gewählten Bedingungen entsteht bei der Pfropfmischpolymerisation ein bestimmter Anteil an freien Copolymerisaten von Styrol beziehungsweise substituierten Styrolderivaten und (Meth)acrylnitil beziehungsweise (Meth)acrylsäureestern.

Das Pfropfmischpolymerisat aus B311 und B312 weist im allgemeinen eine mittlere Teilchengröße von 100 bis 1000 nm, im besonderen von 200 bis 700 nm ($d_{50}$-Gewichtsmittelwert), auf. Die Bedingungen bei der Herstellung des Elastomeren B311 und bei der Pfropfung werden daher so gewählt, daß Teilchengrößen in diesem Bereich resultieren. Maßnahmen hierzu sind bekannt und zum Beispiel in der DE-C 1 260 135 und der DE-A 28 26 925 sowie in Journal of Applied Polymer Science, Vol. 9 (1965), Seite 2929 bis 2938 beschrieben. Die Teilchenvergrößerung des Latex des Elastomeren kann zum Beispiel mittels Agglomeration bewerkstelligt werden.

Zum Pfropfpolymerisat aus B311 und B312 zählen im Rahmen dieser Erfindung auch die bei der Pfropfmischpolymerisation zur Herstellung der Komponente B312 entstehenden freien, nicht-gepfropften Homo- und Copolymerisate.

Nachstehend seien einige bevorzugte Pfropfpolymerisate angeführt:

1: 60 Gew.-% Pfropfgrundlage B311 aus

B3111 98 Gew.-% n-Butylacrylat und
B3112 2 Gew.-% Dihydrodicyclopentadienylacrylat und 40 Gew.-% Pfropfhülle B312 aus
B3121 75 Gew.-% Styrol und
B3122 25 Gew.-% Acrylnitril

2: Pfropfgrundlage wie bei 1 mit 5 Gew.-% einer ersten Pfropfstufe aus Styrol
und
35 Gew.-% einer zweiten Pfropfstufe aus

B3121 75 Gew.-% Styrol und
B3122 25 Gew.-% Acrylnitril

3: Pfropfgrundlage wie bei 1 mit 13 Gew.-% einer ersten Pfropfstufe aus Styrol und 27 Gew.-% einer zweiten Pfropfstufe aus Styrol und Acrylnitril im Gewichtsverhältnis 3:1.

Die als Komponente B313 enthaltenen Produkte können zum Beispiel nach dem in den DE-B 10 01 001 und DE-B 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50 000 bis 500 000, insbesondere von 100 000 bis 250 000.

Das Gewichtsverhältnis von (B311 und B312) : B313 liegt im Bereich von 1:2,5 bis 2,5:1, vorzugsweise von 1:2 bis 2:1 und insbesondere von 1:1,5 bis 1,5:1.

Geeignete SAN-Polymere als Komponente B31 sind vorstehend (siehe B131 und B132) beschrieben.

Die Viskositätszahl der SAN-Polymerisate, gemessen gemäß DIN 53 727 als 0,5 Gew.-%ige Lösung in Dimethylformamid bei 23°C liegt im allgemeinen im Bereich von 40 bis 100, vorzugsweise 50 bis 80 ml/g.

ABS-Polymere als Polymere B31 in den erfindungsgemäßen Formmassen weisen den gleichen Aufbau wie vorstehend für ASA-Polymere beschrieben auf. Anstelle des Acrylatkautschukes B311 der Pfropfgrundlage beim ASA-Polymer werden üblicherweise konjugierte Diene eingesetzt, so daß sich für die Pfropfgrundlage B314 vorzugsweise folgende Zusammensetzung ergibt:

B3141 70 bis 100 Gew.-% eines konjugierten Diens und

B3142 0 bis 30 Gew.-% eines difunktionellen Monomeren mit zwei olefinischen nicht-konjugierten Doppelbindungen.

Als Beispiele für konjugierte Diene seien 1,3 Pentadien, alkylsubstituierte Diene wie 2,3-Dimethylbutadien oder konjugierte Hexadiene, Heptadiene sowie Octadiene und cyclische Diene wie Cyclopentadien genannt, wobei Butadien und Isopren bevorzugt sind.

Pfropfauflage B312 und die Hartmatrix des SAN-Copolymeren B313 bleiben in der Zusammensetzung unverändert. Derartige Produkte sind im Handel erhältlich. Die Herstellverfahren sind dem Fachmann bekannt, so daß sich weitere Angaben hierzu erübrigen.

Das Gewichtsverhältnis von (B314 und B312) : B313 liegt im Bereich von 3:1 bis 1:3, vorzugsweise von 2:1 bis 1:2.

Als Polymer B31 in den erfindungsgemäßen Formmassen kommt weiterhin ein Polymer aus einem $C_1$-$C_{18}$ Alkylester der (Meth)acrylsäure oder deren Mischungen in Betracht.

Als $C_1$-$C_{18}$-Alkylester der Acrylsäure verwendet man erfindungsgemäß die $C_1$-$C_{18}$-Alkylester wie Methyl-, Ethyl-, n-Propyl-, i-Propyl, n-Butyl-, i-Butyl, sek.-Butyl-, tert.-Butyl-, Pentyl-, Hexyl-, Heptyl-, Octyl-, 2-Ethylhexyl-, Nonyl-, Decyl-, Lauryl- oder Stearylacrylat, bevorzugt Methylacrylat, n-Butylacrylat und 2-Ethylhexylacrylat, sowie Mischungen dieser Monomeren.

Als $C_1$-$C_{18}$-Alkylester der Methacrylsäure verwendet man erfindungsgemäß die $C_1$-$C_{18}$-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Octyl-, 2-Ethylhexyl-, Nonyl-, Decyl-, Lauryl- oder Stearylmethacrylat, bevorzugt Methylmethacrylat, sowie Mischungen dieser Monomeren.

Als weitere Comonomere kann man bis zu 50 Gew.-%, bevorzugt von 1 bis 20 Gew.-%, der folgenden beispielhaft aufgeführten Monomeren einsetzen:

- Vinylaromaten wie Styrol, alpha-Methylstyrol, Vinyltoluol oder p-tert.-Butylstyrol;
- p-Aminostyrol;
- p-Hydroxystyrol;
- p-Vinylbenzoesäure;
- Acryl- und Methacrylsäure;
- Acryl- und Methacrylamid;
- Maleinsäure sowie deren Imide und $C_1$-$C_{10}$-Alkylester;
- Fumarsäure sowie deren Imide und $C_1$-$C_{10}$-Alkylester;
- Itaconsäure sowie deren Imide und $C_1$-$C_{10}$-Alkylester:
- Acryl- und Methacrylnitril;
- Hydroxyalkyl(meth)acrylate.

Als besonders vorteilhaft haben sich Polymerisate aus 99 Gew.-% Methylmethacrylat und 1 Gew.-% Methylacrylat mit einem Molekulargewicht (Gewichtsmittelwert $M_w$) von 60 000 bis 300 000 g/mol, insbesondere von 80 000 bis 150 000 g/mol, erwiesen.

Polymethylmethacrylat stellt man in der Regel nach bekannten Polymerisationsverfahren wie Masse-, Lösungs-, Emulsions- oder Perlpolymerisation her. Solche Verfahren sind beispielsweise in Kunststoffhandbuch, Band 9, Vieweg und Esser; Polymethylmethacrylat, Carl-Hanser-Verlag, München, 1975, Seite 36ff, beschrieben.

Komponente B32

Durch den Haftvermittler, welcher mit funktionellen Monomeren modifiziert wird, wird die Phasenhaftung der beiden Polymere A und B31 weiter verbessert.

Üblicherweise wird ein unmodifiziertes ABS-, SAN- oder ASA-Polymer oder (Meth)acrylatpolymer (siehe Komponente B31) durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam-, Halogenbenzyl- oder 1,2,4-Triazolin-3,5-dion-Gruppe (funktionelle Monomere) modifiziert.

Geeignete Modifizierungsmittel sind beispielsweise Maleinsäure, Methylmaleinsäure, Itaconsäure, Tetrahydrophthalsäure, deren Anhydride und Imide, Fumarsäure, die Mono- und Diester dieser Säuren, zum Beispiel von $C_1$- und $C_2$- bis $C_8$-Alkanolen, die Mono- oder Diamide dieser Säuren wie N-Phenylmaleinimid, Maleinhydrazid. Weiterhin seien beispielsweise N-Vinylpyrrolidon und (Meth)acryloylcaprolactam genannt. Eine andere Gruppe von Modifizierungsmitteln umfaßt beispielsweise das Säurechlorid des Trimellithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure.

Besonders bevorzugtes Modifizierungsmittel ist 1,2,4-Triazolin-3,5-dion selbst oder in 4-Stellung substituierte 1,2,4-Triazolin-3,5-dione der Formel (II)

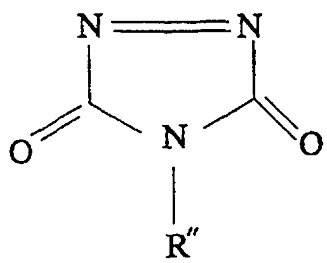

(II)

Hierin kann R" stehen für einen Alkyl-, Cycloalkyl-, Aryl-, Aralkyl- oder Alkylarylrest mit bis zu 25 C-Atomen, einen 5 bis 8-gliedrigen Heterocyclus mit Stickstoff, Sauerstoff oder Schwefel als Heteroatom oder für $NR^7R^8$, wobei $R^7$ und $R^8$ $C_1$- bis $C_4$-Alkylgruppen und insbesondere Wasserstoff sind.

Man kann die funktionellen Monomeren entweder durch Copolymerisation oder Pfropfung in die Polymerkette einführen. Die Pfropfung kann entweder in Lösung oder in der Schmelze erfolgen, wobei gegebenenfalls Radikalstarter wie Peroxide, Hydroperoxide, Perester und Percarbonate mitverwendet werden können.

Komponente C

Die erfindungsgemäßen Formmassen können 0 bis 20, vorzugsweise 0 bis 10 und insbesondere 0 bis 5 Gew.-% eines kautschukelastischen Polymerisats enthalten. Derartige Polymerisate werden oft auch als schlagzähmodifizierende Polymere, Schlagzähmodifier, Elastomere oder Kautschuke bezeichnet.

Die Komponente C weist im allgemeinen mindestens eine Elastomerphase auf, deren Erweichungstemperatur unter -25, bevorzugt unter -30°C liegt.

Komponente C1

Schlagzähmodifizierende Polymere, die die Zähigkeit der Komponente A erhöhen, sind Copolymere des Ethylens mit Propylen sowie gegebenenfalls einem konjugierten Dien (EP-(Ethylen/Propylen)-Copolymere)- beziehungsweise EPDM (Ethylen/Propylen-Dien-Terpolymere)Kautschuke), wobei der Ethylengehalt bevorzugt 45 und insbesondere 50 Gew.-% (bezogen auf 100 Gew.-% der Komponente C1) beträgt.

Derartige Schlagzähmodifier sind allgemein bekannt, weshalb für weitere Einzelheiten hier auf die Publikation von Cartasegna in Kautschuk, Gummi, Kunststoffe 39, 1186-91 (1986) verwiesen sei.

Kautschuke, die die Zähigkeit von Polyamiden erhöhen, weisen im allgemeinen zwei wesentliche Merkmale auf; sie enthalten einen elastomeren Anteil, der eine Glastemperatur von weniger als -10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien zum Beispiel folgende genannt:

EP- beziehungsweise EPDM-Kautschuke, die mit den vorstehenden funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid, auf das Polymere aufgepfropft werden.

Weiterhin seien Copolymere von $\alpha$-Olefinen genannt. Bei den $\alpha$-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl (meth)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-$\alpha$-Olefin hergestellt werden. Der Anteil des $\alpha$-Olefins an dem Copolymeren liegt im allgemeinen im Bereich von 99,95 bis 55 Gew.-%.

Als weitere Gruppe von geeigneten Elastomeren sind Kern-Schale-Pftopfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich unter anderem von Butadien, Isopren, Alkylacrylaten oder Alkylmethacrylaten und gegebenenfalls weiteren Comonomeren ab. Als geeignete Comonomere sind hier zum Beispiel Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich unter anderem von Styrol, $\alpha$-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tert.-Butyl (meth)acrylat, Acrylsäure, Glycidyl(meth)acrylat und Vinyloxazolin. Der Anteil an Monomeren mit funktionellen Gruppen beträgt im allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke, die die Zähigkeit von Polyamiden erhöhen, sind an sich bekannt und beispielsweise in der EP-A-0 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, zum Beispiel in der US 3,651,015, beschrieben. Auch im Handel sind entsprechende Produkte unter den Bezeichnungen Hytrel® (Du Pont), Arnitel® (Akzo) und Pelprene® erhältlich.

Selbstverständlich können auch Mischungen verschiedener Kautschuke eingesetzt werden.

Komponente C2

Wenn die erfindungsgemäßen Formmassen als Komponente B mindestens einen gegebenenfalls modifizierten Polyphenylenether als Komponente B1 aufweisen, kann der Schlagzähmodifier in der Polyamidphase A oder der Polyphenylenetherphase B1 vorliegen. Für den Polyphenylenether der Komponente B1 wird dabei in der Regel ein anderer Schlagzähmodifier als für das Copolyamid der Komponente A eingesetzt. Die Gesamtmenge der eingesetzten Schlagzähmodifier der Komponenten C1 und C2 beträgt dabei 0 bis 20, vorzugsweise 0 bis 10, insbesondere 0 bis 5 Gew.-%. Liegen die Schlagzähmodifier vor, so kann die Menge vorzugsweise 1 bis 20, besonders bevorzugt 2 bis 10, insbesondere 3 bis 5 Gew.-% betragen.

Als Kautschuke der Komponente C2, die die Zähigkeit von Polyphenylenethern erhöhen, seien zum Beispiel folgende genannt:

Polyoctenylene, Pfropfkautschuke mit einem vernetzten, elastomeren Kern, der beispielsweise von Butadien,

Isopren oder Alkylacrylaten abgeleitet ist, und einer Pfropfhülle aus Polystyrol, weiterhin Copolymere aus Ethylen und Acrylaten beziehungsweise Methacrylaten sowie die sogenannten Ethylen-Propylen (EP)- und Ethylen-Propylen-Dien (EPDM)-Kautschuke, ferner die mit Styrol gepfropften EP- beziehungsweise EPDM-Kautschuke.

Ferner können Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, eingesetzt werden.

Mischungen aus Blockcopolymeren verschiedener Strukturen, zum Beispiel Mischungen aus Zwei- und Dreiblockcopolymeren oder aus hydrierten und unhydrierten Blockcopolymeren, können ebenfalls eingesetzt werden.

Derart schlagzäh modifizierende Polymere sind an sich bekannt und in der Literatur beschrieben. Nur beispielsweise sei hier auf US 4,085,163, US 4,041,103, US 3,149,182, US 3,231,635 und US 3,462,162 verwiesen.

Auch im Handel sind entsprechende Produkte erhältlich, zum Beispiel ein Polyoctylen der Bezeichnung Vestenamer® (Hüls AG), sowie eine Vielzahl geeigneter Blockcopolymere mit mindestens einem vinylaromatischen und einem elastomeren Block. Beispielhaft seien die Cariflex®-TR-Typen (Shell), die Kraton®-G-Typen (Shell), die Finaprene®-Typen (Fina) und die Europene®-SOL-TR-Typen (Enichem) genannt.

Komponente D

Komponente D liegt in den erfindungsgemäßen Formmassen in einer Menge von 0 bis 50, vorzugsweise 10 bis 40, insbesondere 20 bis 30 Gew.-% vor.

Als Komponente D wird mindestens ein Füllstoff eingesetzt.

Bevorzugte faserförmige Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Copolyamid A mit einer Schlichte und einem Haftvermittler ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat, Kreide, Kaolin (insbesondere kalzinierter Kaolin), gepulverter Quarz, Glimmer, Talkum, Feldspat und insbesondere Calciumsilikate wie Wollastonit. Nanocomposite können eingesetzt werden.

Bevorzugte Kombinationen von Füllstoffen sind zum Beispiel 20 Gew.-% Glasfasern mit 15 Gew.-% Wollastonit und 15 Gew.-% Glasfasern mit 15 Gew.-% Wollastonit. Außerdem können Metallflocken (zum Beispiel Aluminiumflocken der Transmet Corp.), Metallpulver, Metallfasern, metallbeschichtete Füllstoffe, zum Beispiel nickelbeschichtete Glasfasern sowie andere Zuschlagstoffe, die elektromagnetische Wellen abschirmen, beigemischt werden. Insbesondere kommen Aluminiumflocken (K 102 der Transmet Corp.) für EMI-Zwecke (electro-magnetic-interference) in Betracht. Ferner können die Massen mit zusätzlichen Kohlenstofffasern, Ruß, insbesondere Leitfähigkeitsruß oder nickelbeschichteten C-Fasern vermischt werden.

Weiterhin können vorzugsweise delaminierte Schichtsilikate als Füllstoffe eingesetzt werden. Die erfindungsgemäßen Formmassen können 5 bis 15, vorzugsweise 1 bis 10 und insbesondere 2 bis 9 Gew.-% eines delaminierten Schichtsilikates (Phyllosilikat), insbesondere in Komponente A, enthalten. Derartige Schichtsilikate sind beispielsweise in Giannelis, Adv. Mat. 1996, 8-1, 29 beschrieben. Unter einem Schichtsilikat versteht man im allgemeinen Silikate, in welchen die $SiO_4$-Tetraeder in zweidimensionalen unendlichen Netzwerken verbunden sind. Die empirische Formel für das Anion lautet $(Si_2O_5^{2-})_n$. Die einzelnen Schichten sind durch die zwischen ihnen liegenden Kationen miteinander verbunden, wobei meistens als Kationen Na, K, Mg, Al oder/und Ca in den natürlich vorkommenden Schichtsilikaten vorliegen.

Die Schichtdicken derartiger Silikate vor der Delaminierung betragen üblicherweise von 5 bis 100 Å, vorzugsweise 5 bis 50 und insbesondere 8 bis 20 Å.

Als Beispiel für synthetische und natürliche Schichtsilikate (Phyllosilikate) seien Montmorillonit, Smectit, Illit, Sepiolit, Palygorskit, Muscovit, Allevardit, Amesit, Hectorit, Fluorhectorit, Saponit, Beidellit, Talkum, Nontronit, Stevensit, Bentonit, Glimmer, Vermiculit, Fluorvermiculit, Halloysit und Fluor enthaltende synthetische Mica-Typen genannt.

Unter einem delaminierten Schichtsilikat im Sinne der Erfindung sollen Schichtsilikate verstanden werden, bei welchen durch Umsetzung mit sogenannten Hydrophobierungsmitteln und gegebenenfalls anschließender Zugabe von Monomeren oder Oligomeren der erfindungsgemäßen Copolyamide (auch als Quellung bezeichnet) die Schichtabstände zunächst vergrößert wurden.

Durch anschließende Polykondensation oder Mischung zum Beispiel durch Konfektionierung des hydrophobierten und gegebenenfalls gequollenen Schichtsilikates mit dem erfindungsgemäßen Copolyamiden der Komponente A erfolgt die Delaminierung der Schichten, welche im Formkörper vorzugsweise zu einem Schichtabstand von mindestens 40 Å, vorzugsweise mindestens 50 Å führt.

Zur Vergrößerung der Schichtabstände (Hydrophobierung) werden die Schichtsilikate (vor der Herstellung der erfindungsgemäßen Formmassen) mit sogenannten Hydrophobierungsmitteln umgesetzt, welche of auch als Oniumionen oder Oniumsalze bezeichnet werden.

Die Kationen der Schichtsilikate werden durch organische Hydrophobierungsmittel ersetzt, wobei durch die Art des organischen Restes die gewünschten Schichtabstände eingestellt werden können, die sich nach der Art des jeweiligen Monomeren oder Polymeren, in welches das Schichtsilikat eingebaut werden soll, richten.

Der Austausch der Metallionen kann vollständig oder teilweise erfolgen. Bevorzugt ist ein vollständiger Austausch der Metallionen. Die Menge der austauschbaren Metallionen wird üblicherweise in Milliäquivalenten (meq) pro 100 g Schichtsilikat angegeben und als Ionenaustauschkapazität bezeichnet.

Bevorzugt sind Schichtsilikate mit einer Kationenaustauschkapazität von mindestens 50, vorzugsweise 80 bis 130 meq/100 g.

Geeignete organische Hydrophobierungsmittel leiten sich von Oxonium-, Ammonium-, Phosphonium- und Sulfoniumionen ab, welche einen oder mehrere organische Reste tragen können.

Als geeignete Hydrophobierungsmittel seien solche der allgemeinen Formeln VII und/oder VIII genannt:

$$[XR^7R^8R^9R^{10}]^{n+}Z^n \qquad (VII)$$

$$[YR^7R^8R^9]^{n+}Z^{n-} \qquad (VIII)$$

wobei in den Substituenten

| | |
|---|---|
| $R^7$, $R^8$, $R^9$, $R^{10}$ | unabhängig voneinander für Wasserstoff, einen geradkettigen, verzweigten, gesättigten oder ungesättigten Kohlenwasserstoffrest mit 1 bis 40, vorzugsweise 1 bis 20 C-Atomen, welcher gegebenenfalls mindestens eine funktionelle Gruppe tragen kann, oder wobei 2 der Reste miteinander verbunden sind, insbesondere zu einem heterocyclischen Rest mit 5 bis 10 C-Atomen, |
| X | für Phosphor oder Stickstoff, |
| Y | für Sauerstoff oder Schwefel, |
| n | für eine ganze Zahl von 1 bis 5, vorzugsweise 1 bis 3 und |
| Z | für ein Anion |

stehen.

Geeignete funktionelle Gruppen sind Hydroxyl-, Nitro- oder Sulfogruppen, wobei Carboxylgruppen besonders bevorzugt sind, da durch derartige funkfionelle Gruppen eine verbesserte Anbindung an die Endgruppen des Polyamids erfolgt.

Geeignete Anionen Z leiten sich von Protonen liefernden Säuren, insbesondere Mineralsäuren ab, wobei Halogene wie Chlor, Brom, Fluor, Iod, Sulfat, Sulfonat, Phosphat, Phosphonat, Phosphit und Carboxylat, insbesondere Acetat, bevorzugt sind.

Die als Ausgangsstoffe verwendeten Schichtsilikate werden in der Regel in Form einer Suspension umgesetzt. Das bevorzugte Suspendiermittel ist Wasser, gegebenenfalls in Mischung mit Alkoholen, insbesondere niederen Alkoholen mit 1 bis 3 Kohlenstoffatomen. Es kann vorteilhaft sein, zusammen mit dem wäßrigen Medium einen Kohlenwasserstoff, zum Beispiel Heptan, einzusetzen, da die hydrophobierten Schichtsilikate mit Kohlenwasserstoffen gewöhnlich verträglicher sind als mit Wasser.

Weitere geeignete Beispiele für Suspendiermittel sind Ketone und Kohlenwasserstoffe. Gewöhnlich wird ein mit Wasser mischbares Lösungsmittel bevorzugt. Bei der Zugabe des Hydrophobierungsmittels zum Schichtsilikat tritt ein Ionenaustausch ein, wodurch das Schichtsilikat üblicherweise hydrophober wird und aus der Lösung ausfällt. Das als Nebenprodukt des Ionenaustauschs entstehende Metallsalz ist vorzugsweise wasserlöslich, so daß das hydrophobierte Schichtsilikat als kristalliner Feststoff durch zum Beispiel Abfiltrieren abgetrennt werden kann.

Der Ionenaustausch ist von der Reaktionstemperatur weitgehend unabhängig. Die Temperatur liegt vorzugsweise über dem Kristallisationspunkt des Mediums und unter seinem Siedepunkt. Bei wäßrigen Systemen liegt die Temperatur zwischen 0 und 100°C, vorzugsweise zwischen 40 und 80°C.

Für die erfindungsgemäßen Copolyamide der Komponente A beziehungsweise Formmassen daraus sind

Alkylammoniumionen bevorzugt, welche insbesondere durch Umsetzung von geeigneten ω-Aminocarbonsäuren wie ω-Aminododecansäure, ω-Aminoundecansäure, ω-Aminobuttersäure, ω-Aminocaprylsäure oder ω-Aminocapronsäure mit üblichen Mineralsäuren, beispielsweise Salzsäure, Schwefelsäure oder Phosphorsäure oder Methylierungsmitteln wie Methyliodid erhältlich sind.

Weitere bevorzugte Alkylammoniumionen sind Laurylammonium-, Myristylammonium-, Palmitylammonium-, Stearylammonium-, Pyridinium-, Octadecylammonium-, Monomethyloctadecylammonium- und Dimethyloctadecylammoniumionen.

Als geeignete Phosphoniumionen seien beispielsweise Docosyltrimethylphosphonium, Hexatriacontyltricyclohexylphosphonium, Octadecyltriethylphosphonium, Dieicosyltriisobutylphosphonium, Methyltrinonylphosphonium, Ethyltrihexadecylphosphonium, Dimethyldidecylphosphonium, Diethyldioctadecylphosphonium, Octadecyldiethylallylphosphonium, Trioctylvinylbenzylphosphonium, Dioctydecylethylhydroxyethylphosphonium, Docosyldiethyldichlorbenzylphosphonium, Octylnonyldecylpropargylphosphonium, Triisobutylperfluordecylphosphonium, Eicosyltrihydroxymethylphosphonium, Triacontyltris-cyanethylphosphonium und Bistrioctylethylendiphosphonium genannt.

Weitere geeignete Hydrophobierungsmittel sind unter anderem in WO 93/4118, WO 93/4117, EP-A-0 398 551 und DE-A 36 32 865 beschrieben.

Nach der Hydrophobierung weisen die Schichtsilikate einen Schichtabstand von 10 bis 40 Å, vorzugsweise von 13 bis 20 Å auf. Der Schichtabstand bedeutet üblicherweise den Abstand von der Schichtunterkante der oberen Schicht zur Schichtoberkante der unteren Schicht. Die Länge der Blättchen beträgt üblicherweise bis zu 2000 Å, vorzugsweise bis zu 1500 Å.

Das auf die vorstehende Weise hydrophobierte Schichtsilikat kann anschließend in Suspension oder als Feststoff mit den Copolyamid-Monomeren oder -Präpolymeren der Komponente A gemischt und die Polykondensation in üblicher Weise durchgeführt werden.

Hierbei ist es möglich, den Schichtabstand weiter zu vergrößern, indem man das Schichtsilikat mit Monomeren beziehungsweise Präpolymeren der erfindungsgemäßen Copolyamide bei Temperaturen von 25 bis 300, vorzugsweise von 100 bis 280 und insbesondere von 200 bis 260°C über eine Verweilzeit von 5 bis 120 Minuten, vorzugsweise von 10 bis 60 Minuten umsetzt (sogenannte Quellung). Je nach Dauer der Verweilzeit und Art des gewählten Monomeren vergrößert sich der Schichtabstand zusätzlich um 10 bis 140, vorzugsweise um 20 bis 50 Å. Anschließend führt man die Polykondensation der Nachkondensation in üblicher Weise durch. Besonders vorteilhaft wird die Polykondensation unter gleichzeitiger Scherung durchgeführt, wobei vorzugsweise Scherspannungen gemäß DIN 11 443 von 10 bis $10^5$ Pa, insbesondere $10^2$ bis $10^4$ Pa vorliegen.

Die delaminierten Schichtsilikate können hierbei zu den Monomeren oder zur Präpolymerschmelze (Entgasungsextruder) hinzugegeben werden.

Komponente E

Komponente E liegt in den erfindungsgemäßen Formmassen in einer Menge von 0 bis 20, vorzugsweise 0 bis 10, bei Stabilisatoren insbesondere 0 bis 1 Gew.-% vor.

Komponente E enthält die üblichen Zusatzstoffe und Verarbeitungshilfsmittel für Polyamid-Blends. Als solche Zusatzstoffe seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern beziehungsweise Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder andere spezielle Effekte) des Zusatzstoffes auszunutzen.

Beispielsweise können, insbesondere in Polyphenylenether-Blends, Flammschutzmittel zugesetzt werden.

Geeignete Flammschutzmittel sind zum Beispiel Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A, der Tetrabromphthalsäure, des 2,6-Dibromphenols und 2,4,6-Tribromphenols und deren Derivate.

Bevorzugtes Flammschutzmittel ist elementarer Phosphor. In der Regel kann der elementare Phosphor mit zum Beispiel Polyurethanen oder Aminoplasten phlegmatisiert oder gecoated werden. Außerdem sind Konzentrate von rotem Phosphor zum Beispiel in einem Polyamid, Elastomeren oder Polyolefin geeignet.

Besonders bevorzugt sind Kombinationen von elementarem Phosphor mit 1, 2,3,4,7,8,9,10,13,13,14,14-Dodecachloro-1,4,4a,5,6,6a,7,10,10a,11,12,12a-dodecahydro-1,4:7,10-dimethanodibenoe(a,e)-cyclooctan (Dechlorane®Plus, Occidental Chemical Corp.) und gegebenenfalls einem Synergisten, wie Antimontrioxid.

Phosphorverbindungen, wie organische Phosphate, Phosphonate, Phosphinate, Phosphinoxide, Phosphine

oder Phosphite sind ebenfalls bevorzugt. Als Beispiel seien Triphenylphosphinoxid und Triphenylphosphat genannt. Dieses kann allein oder vermischt mit Hexabrombenzol oder einem chlorierten Biphenyl und, wahlweise, Antimonoxid verwendet werden.

Typisch für die bevorzugten Phosphorverbindungen, die gemäß der vorliegenden Erfindung verwendet werden können, sind solche der allgemeinen Formel

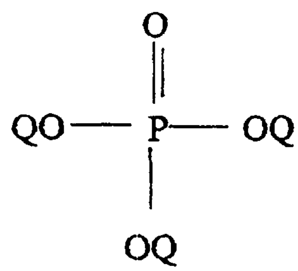

worin Q für gleiche oder verschiedene Kohlenwasserstoffreste, wie Alkyl, Cycloalkyl. Aryl, alkylsubstituiertes Aryl und arylsubstituiertes Alkyl steht, ferner für Halogen, Wasserstoff und deren Kombinationen, vorausgesetzt, daß mindestens einer der für Q stehenden Reste ein Arylrest ist.

Beispiele solcher geeigneter Phosphate sind die folgenden:
Phenylbisdodecylphosphat, Phenylbisneopentylphosphat, Phenylethylhydrogenphosphat, Phenyl-bis-(3-5,5'-trimethylhexylphosphat), Ethyldiphenylphosphat, 2-Ethylhexyldi(p-tolyl)phosphat, Bis-(2-ethylhexyl)phenylpbosphat, Tri (nonylphenyl)phosphat, Phenylmethylhydrogenphosphat, Di(dodecyl)-p-tolylphosphat, Tri-cresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphornitrilchlorid, Phosphorsäureesteramide, Phosphorsäureesteramine, Phosphorsäureamide, Phosphonsäureamide, Tris(aziridinyl)phosphinoxid oder Tetrakis(hydroxymethyl)phosphoniumchlorid. Diese entflammungshemmenden Additive sind größtenteils im Handel erhältlich.

Weitere geeignete Flammschutzmittel sind Hydroxide des Magnesiums, welche gegebenenfalls mit Silanverbindungen beschichtet sind.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Weitere übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den erfindungsgemäßen Formmassen zugesetzt werden können, sind zum Beispiel Halogenide von Metallen der Gruppe I des Periodensystems, zum Beispiel Natrium-, Kalium-, Lithium-halogenide, gegebenenfalls in Verbindung mit Kupfer-(I)-Halogeniden, zum Beispiel Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der Formmasse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors und Titans genannt. Besonders geeignete Verbindungen sind zum Beispiel Oxide der genannten Metalle, ferner Carbonate oder Oxicarbonate, Hydroxide sowie Salze organischer oder anorganischer Säuren wie Acetate oder Phosphate beziehungsweise Hydrogenphosphate und Sulfate.

Als bevorzugten Stabilisator können die erfindungsgemäßen Formmassen mindestens eine phosphorhaltige

anorganische Säure oder deren Derivate in Mengen bis zu 1000, bevorzugt 30 bis 200 und insbesondere 50 bis 130 ppm, bezogen auf den Phosphorgehalt der Verbindungen, enthalten.

Bevorzugte Säuren sind hypophosphorige Säure, phosphorige Säure oder Phosphorsäure sowie deren Salze mit Alkalimetallen, wobei Natrium und Kalium besonders bevorzugt sind. Unter organischen Derivaten dieser Säuren sollen vorzugsweise Esterderivate oben-genannter Säuren mit Fettsäuren verstanden werden, wobei die Fettsäuren 12 bis 44 C-Atome, bevorzugt 22 bis 40 C-Atome aufweisen. Als Beispiele seien Stearinsäure, Behensäure, Palmitinsäure oder Montansäure genannt.

Als Keimbildungsmittel können Natriumphenylphosphinat, Aluminiumoxid, Siliciumdioxid, Nylon 22 sowie bevorzugt Talkum eingesetzt werden.

Gleit- und Entformungsmittel, welche üblicherweise in Mengen bis zu 1 Gew.-% eingesetzt werden, sind bevorzugt langkettige Fettsäuren (zum Beispiel Stearinsäure oder Behensäure), deren Salze (zum Beispiel Ca- oder Zn-stearat) oder Esterderivate (zum Beispiel Stearylstearat oder Pentaerythrittetrastearat) sowie Amidderivate (zum Beispiel Ethylen-bis-stearylamid).

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seite 494 bis 510. Als erste bevorzugte Gruppe von Pigmenten sind Weißpigmente zu nennen wie Zinkoxid, Bleiweiß (2 $PbCO_3$ $Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu(Cr,Fe)_2O_4$), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), Seite 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente beziehungsweise Farbstoffe in Mischungen einzusetzen, zum Beispiel Ruß mit Kupferphthalocyaninen, da allgemein die Farbdispergierung im Thermoplasten erleichtert wird.

**Herstellung der Formmassen**

Die Erfindung betrifft auch ein Verfahren zur Herstellung der vorstehend beschriebenen Formmassen. Dabei wird zunächst die Komponente A hergestellt und sodann mit der Komponente B und den gegebenenfalls vorliegenden Komponenten C, D und/oder E gemischt. Die delaminierten Schichtsilikate der Komponente C können auch bei der Herstellung der Komponente A eingebracht werden. Bevorzugt ist ein Verfahren zur Herstellung der erfindungsgemäßen Formmassen durch

Lösen der Komponenten A1 und A2 in Wasser,

Kondensation des so erhaltenen wäßrigen Gemisches bei einem Druck in einem Bereich von 1 bis 20 bar und einer Temperatur im Bereich von 200 bis 300°C zu einem Präpolymer,

Nachkondensation des so erhaltenen Präpolymers durch Festphasenkondensation mit überhitztem Wasserdampf bei einem Druck im Bereich von 0 bis 5 bar und einer Temperatur im Bereich von 5 bis 50°C unterhalb des Schmelzpunktes und

Mischen des Copolyamids A mit den Komponenten B, und gegebenenfalls C, D und/oder E.

Das Verfahren zur Herstellung der Komponente A wird dabei vorzugsweise kontinuierlich durchgeführt. Die näheren Verfahrensbedingungen und die Durchführung des Verfahrens sind in der DE-A-33 21 579 beschrieben.

Das Verfahren kann auch diskontinuierlich durchgeführt werden.

Das Mischen der Komponenten A bis E kann nach an sich bekannten Verfahren erfolgen. Es kann vorteilhaft sein, einzelne Komponenten vorzumischen.

Das Mischen der beispielsweise trockenen Komponenten kann nach allen bekannten Methoden erfolgen.

Vorzugsweise geschieht jedoch das Mischen durch gemeinsames Extrudieren, Kneten oder Verwalzen der Komponenten, bevorzugt bei Temperaturen von 180 bis 320°C. Dabei können die Komponenten gemeinsam oder getrennt/nacheinander eindosiert werden.

Die erfindungsgemäßen Formmassen können zur Herstellung von Formkörpern, Fasern und Folien verwendet werden.

Die Herstellung der Formkörper, Fasern oder Folien erfolgt dabei nach bekannten Verfahren.

Die Erfindung betrifft auch die Formkörper, Fasern oder Folien, die aus den vorstehend aufgeführten Formmassen hergestellt sind.

Die Erfindung wird nachstehend anhand von Beispielen näher erläutert.

**Herstellung der Komponente A in kontinuierlichem Prozeß**

Die kontinuierliche Herstellung des Copolyamids erfolgte nach dem in der DE-A 33 21 579 beschriebenen Verfahren. Teile sind Gewichtsteile.

VZ: Die Viskositätszahl (VZ) wurde als 0,5%ige Lösung in 96%iger Schwefelsäure bei 25°C bestimmt.

Triamingehalt: Der Triamingehalt wurde nach vollständiger Hydrolyse der Produkte durch 12stündiges Erhitzen unter Rückfluß mit 18%iger Salzsäure mittels HPLC direkt bestimmt.

**Beispiel 1A** 3 Gew.-%-Komponente A2

5,622 Teile eines äquimolaren Salzes aus Adipinsäure und Hexamethylendiamin wurden zusammen mit 0,172 Teilen eines ebenfalls äquimolaren Salzes aus Isophthalsäure und Hexamethylendiamin in 3,551 Teilen Wasser bei 85°C gelöst und entsprechend einer Copolyamidmenge von 5 kg/h mittels einer Dosierpumpe in eine Polykondensationsstufe dosiert, binnen 10 Minuten bei 285°C und einem Druck von 5 bar in ein Präpolymer überführt, anschließend in einem Doppelschneckenextruder bei 285°C auf Atmosphärendruck entspannt und in die Granulatform überführt.

Das erhaltene Präpolymer hatte eine Viskositätszahl (VZ) von 66,8 $cm^3/g$, 145 meq/kg Carboxylendgruppen, 145 meq/kg Aminoendgruppen, einen Gehalt an Bishexamethylentriamin von 0,16 %o und einen DSC-Schmelzpunkt von 256,5°C.

Das Präpolymer wurde durch kontinuierliche Festphasenkondensation mit überhitztem Wasserdampf binnen 8 Stunden bei 188°C auf eine Endviskosität von VZ = 145 $cm^3/g$ nachkondensiert.

**Beispiel 2A** 4,5 Gew. %-Komponente A2

Analog Beispiel 1 wurden 5,535 Teile eines äquimolaren Salzes aus Adipinsäure und Hexamethylendiamin mit 0,258 Teilen eines ebenfalls äquimolaren Salzes aus Isophthalsäure und Hexamethylendiamin in 3,55 Teilen Wasser bei 85°C gelöst. Die Lösung wurde wie in Beispiel 1A beschrieben polykondensiert. Das dabei erhaltene Präpolymer hatte eine VZ von 65,0 $cm^3/g$, 159 meq/kg Carboxylendgruppen, 160 meq/kg Aminoendgruppen, einen Gehalt an Bishexamethylentriamin von 0,17 ‰ und einen DSC-Schmelzpunkt von 254,7°C.

Das Präpolymer wurde durch kontinuierliche Festphasenkondensation analog Beispiel 1A nachkondensiert. Bei einer Verweilzeit von 9 Stunden und einer Temperatur von 187°C wurde eine Viskositätszahl von 147 $cm^3/g$ erhalten.

**Vergleichsbeispiel V1A** 6,0 Gew.-%-Komponente A2

Analog Beispiel 1A wurden 5,448 Teile eines äquimolaren Salzes aus Adipinsäure und Hexamethylendiamin mit 0,344 Teilen eines ebenfalls äquimolaren Salzes aus Isophthalsäure und Hexamethylendiamin in 3,55 Teilen Wasser bei 85°C gelöst. Die Lösung wurde wie in Beispiel 1A beschrieben polykondensiert. Das dabei erhaltene Präpolymer hatte eine VZ von 64,0 $cm^3/g$, 163 meq/kg Carboxylendgruppen, 164 meq/kg Aminoendgruppen, einen Gehalt an Bishexamethylentriamin von 0,17 %o und einen DSC-Schmelzpunkt von 254,2°C.

Das Polymer wurde durch kontinuierliche Festphasenkondensation analog Beispiel IA nachkondensiert. Bei einer Verweilzeit von 10 Stunden und einer Temperatur von 188°C wurde eine Viskositätszahl von 148 $cm^3/g$ erhalten.

**Vergleichsbeispiel V2A** ohne Komponente A2

Analog Beispiel 1A wurden 5,790 Teile eines äqimolaren Salzes aus Adipinsäure und Hexamethylendiamin in 3,55 Teilen Wasser bei 85°C gelöst. Die Lösung wurde wie in Beispiel 1A beschrieben polykondensiert. Das dabei erhaltene Präpolymer hatte eine VZ von 69,5 $cm^3/g$, 134 meq/kg Carboxylendgruppen, 135 meq/kg Aminoendgruppen, einen Gehalt an Bishexamethylentriamin von 0,13 %o und einen DSC-Schmelzpunkt von 257,4°C.

Das Polymer wurde durch kontinuierliche Festphasenkondensation analog Beispiel 1A nachkondensiert. Bei einer Verweilzeit von 8 Stunden und einer Temperatur von 188°C wurde eine Viskositätszahl von 146 $cm^3/g$ erhalten.

**Vergleichsbeispiel V3A**

Auf einem Zweischneckenextruder (ZSK 30 von Werner & Pfleiderer) wurden 95,5 Gew.-% Polyamid 66 (VZ = 120, beispielsweise Ultramid® A 25 der BASF AG) und 4,5 Gew.-% Polyamid 61 (VZ = 72) zu einem Copolyamid mit Blockstruktur konfektioniert.

**Vergleichsbeispiel V4A** Komponente A aus EP-A-0 722 986

Eine ca. 60 %ige wäßrige Lösung, bestehend aus Terephthalsäure (32,2 mol-% $\hat{=}$ 37,5 Gew.-%), Isophthalsäure (17,8 mol-% $\hat{=}$ 20,6 Gew.-%), Hexamethylendiamin (48,1 mol-% $\hat{=}$ 39,1 Gew.-% beziehungsweise 1,9 mol-% $\hat{=}$ 2,8 Gew.-%), Bis(4-aminocyclohexyl)methan )methan und 0,174 kg Propionsäure sowie 100 kg Wasser wurde aus einem beheizten Vorratsbehälter bei ca. 80°C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 326°C hatte, bei kräftiger Umwälzung beheizt. Der Verdampfer hatte eine Länge von 3 m und einen Inhalt von 180 ml und eine wärmeübertragende Oberfläche von etwa 1300 $cm^2$. Die Verweilzeit im Verdampfer betrug 50 sec. Das aus dem Verdampfer austretende Gemisch aus Präpolymeren und Wasserdampf hatte eine Temperatur von 310°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 1 Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.-%. Als Kolonnensumpf erhielt man eine wäßrige Lösung von Hexamethylendiamin, die 80 Gew.-% Hexamethylendiamin, jeweils bezogen auf erzeugtes Polyamid, enthielt. Diese Lösung wurde über eine Pumpe wieder vor dem Eintritt in den Verdampfer der Ausgangssalzlösung zugegeben.

Nach Austritt der Polymerschmelze aus dem Abscheider hatte das Polyamid eine sehr helle Eigenfarbe und eine Viskositätszahl von 48 ml/g (gemessen als 0,5 %ige Lösung bei 25°C in 96 Gew.-%iger $H_2SO_4$ gemäß DIN 53 246).

Das Produkt wies in etwa eine Äquivalenz von Carboxyl- und Aminoendgruppen auf.

Im Austragsextruder wurde die Schmelze auf Normaldruck entspannt und bei einer Verweilzeit von wniger als 1 Minute praktisch nicht mehr weiter kondensiert.

Anschließend wurde das Produkt in fester Phase in einem feststehenden Temperrohr (doppelwandiges, von außen mit Öl auf Temper-Temperatur beheiztes Glasrohr von 120 mm Innendurchmesser und 1000 mm Länge, das mit überhitztem Wasserdampf mit 120 l/min durchströmt ist) bei 200°C diskontinuierlich auf eine Viskositätszahl von 112 ml/g getempert. Die Verweilzeit betrug 23 h. Im Verlauf dieser Temperung wurde gegebenenfalls auch ein Großteil der extrahierbaren Restmonomere vom Wasserdampf extrahiert.

Zusammensetzung:

| | |
|---|---|
| 32,2 mol-% | beziehungsweise 37,5 Gew.-% Terephthalsäure-Einheiten |
| 17,8 mol-% | beziehungsweise 20,6 Gew.-% Isophthalsäure-Einheiten |
| 48,1 mol-% | beziehungsweise 39,1 Gew.-% Hexamethylendiamin-Einheiten |
| 1,9 mol-% | beziehungsweise 2,8 Gew.-% Bis(4-aminocyclo-hexyl/methan-Einheiten |

Als relatives Maß für den Kristallinitätsgrad wurde die spezifische Schmelzwärme $\Delta H_{krist.}$ mittels Differential Scanning Colorimetric (DSC 990 Firma Du Pont) bei 20°C/min Aufheizrate bestimmt: 54 J/g.

**Vergleichsbeispiel V5A**

Es wurde ein Copolyamid mit 70 Gew.-% Einheiten, die sich von Terephthalsäure und Hexamethylendiamin ableiten (Copolyamid 6 T) und 30 Gew.-% Einheiten, die sich von Caprolactam ableiten (Polyamid 6) eingesetzt. Die

Herstellung und Charakterisierung erfolgte wie folgt:

Eine wäßrige Lösung, bestehend aus 35 kg ε-Caprolactam, 55 kg Terephtalsäure, 38,5 kg Hexamethylendiamin und 128,5 kg Wasser wurde aus einem beheizten Vorratsbehälter bei ca. 80°C mit einer Geschwindigkeit entsprechend einer Polyamidmenge von 5 kg/Stunde mittels einer Dosierpumpe in einen teilweise horizontal, teilweise vertikal angeordneten Röhrenverdampfer befördert. Der Verdampfer war mit einem flüssigen Wärmeträger, der eine Temperatur von 295°C hatte, bei kräftiger Umwälzung beheizt. Der Verdampfer hatte eine Länge von 3 m und einen Inhalt von 180 ml und eine wärmeübertragende Oberfläche von etwa 1300 $cm^2$. Die Verweilzeit im Verdampfer betrug 50 sec. Das aus dem Verdampfer austretende Gemisch aus Präpolymeren und Wasserdampf hatte eine Temperatur von 290°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 liter Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an ε-Caprolactam von weniger als 0,1 Gew.-%. Als Kolonnensumpf erhielt man eine wäßrige Lösung von Hexamethylendiamin, die 80 Gew.-% Hexamethylendiamin und 1 bis 3% ε-Caprolactam, jeweils bezogen auf erzeugtes Polyamid enthielt. Diese Lösung wurde über eine Pumpe vor dem Eintritt in den Verdampfer wieder der Ausgangssalzlösung zugegeben.

Nach dem Verdampfer hatte das Präpolymere eine relative Viskosität von 1,25, gemessen in 98 Gew.-%iger Schwefelsäure bei 20°C und wies nach der Endgruppenanalyse einen Umsatz von 93 bis 95% auf. Der Gehalt an Bishexamethylentriamin betrug 0,1 bis 0,15 Gew.-%, bezogen auf Polyamid.

Nach Austritt der Polymerschmelze aus dem Abscheider hatte das Polyamid eine sehr helle Eigenfarbe und einen äußerst niedrigen Gehalt an Bis-hexamethylentriamin von 0,17% sowie eine relative Viskosität von 1,65 bis 1,80.

Das Produkt wies in etwa eine Äquivalenz von Carboxyl- und Aminoendgruppen auf.

Der Gehalt an extrahierbaren Anteilen (Extraktion mit Methanol) betrug 3,1 bis 3,3 Gew.-%.

Im Austragsextruder wurde die Schmelze dann auf Normaldruck entspannt und bei einer Verweilzeit von weniger als 1 Minute praktisch nicht mehr weiter kondensiert. Das erhaltene Granulat wurde durch kontinuierliche Festphasenkondensation mit überhitztem Wasserdampf bei 195°C und einer Verweilzeit von 30 Stunden auf eine Endviskosität von η-rel = 2,50 kondensiert. Der Gehalt an extrahierbaren Anteilen betrug dann 0,2 Gew.-% (Methanolextrakt).

**Beispiel 1B (Komponente B1c)**

90 Gew.-% Poly(2,6-dimethyl-1,4-phenylenether) mit einer reduzierten spezifischen Viskosität von 0,6 ml/g (1 Gew.-%ig in Chloroform bei 25°C), 8 Gew.-% Polystyrol (MFI bei 200°C und 5 kg Belastung: 24 g/10 min), 1,95 Gew.-% Fumarsäure und 0,05 Gew.-% 3,4-Dimethyl-3,4-diphenylhexan wurden in einem Zweischneckenextruder (ZSK 30 von Werner & Pfleiderer) dosiert, in einem ersten Teil unter Verwendung von Knetelementen aufgeschmolzen, in einem zweiten Teil unter Verwendung von Knetelementen bei 280°C umgesetzt und anschließend in einer Entgasungszone bei 300°C entgast. Die mittlere Verweilzeit im Extruder betrug 1,5 min.

**Beispiel 2B (Komponente B21)**

Es wurde Polypropylen mit einem MVI von 2,4 g/10 min (gemessen nach DIN 53735 bei 230°C und 2,16 kg Belastung) und einem Schmelzpunkt von 165°C (Novolen® 1100H der BASF AG) eingesetzt.

**Beispiel 3B (Komponente B22)**

Es wurde mit 0,3 Gew.-% Maleinsäureanhydrid modifiziertes Polypropylen (Exxelor® PO 1015 von Exxon) eingesetzt.

**Beispiel 4B (Komponente B31)**

Ein ABS-Polymer (Terluran® 967 K der BASF AG) erhältlich gemäß Beispiel 1 der DE-A 24 27 960:

In einem für 10 atü ausgelegten V2A-Stahlkessel mit Blattrührer wurden die folgenden Produkte vorgelegt:

| | |
|---|---|
| 150 | Teile Wasser, |

(fortgesetzt)

| | |
|---|---|
| 1,2 | Teile des Natriumsalzes einer Paraffinsulfonsäure ($C_{12}$-$C_{18}$), |
| 0,3 | Teile Kaliumpersulfat, |
| 0,3 | Teile Natriumbicarbonat, |
| 0,15 | Teile Natriumpyrophosphat. |

Zur Entfernung des Sauerstoffs wurde der Kessel zweimal mit Stickstoff gespült und die Lösung auf 65°C erhitzt. Darauf wurden der Lösung 0,5 Teile tert.-Dodecylmercaptan und 16,6 Teile Butadien zugeführt. 1 Stunde nach Polymerisationsbeginn wurden weitere 83,3 Teile Butadien innerhalb von 5 Stunden zudosiert. 5 Stunden nach Beendigung der Butadienzugabe, das heißt nach insgesamt 11 Stunden, wurden nochmals 0,5 Teile tert.-Dodecylmercaptan zugegeben. Nach der Reaktionszeit von insgesamt 19 Stunden wurde bei einem Umsatz von 96% eine Polybutadien-Emulsion mit einem Feststoffgehalt von 39,2%, bezogen auf die Emulsion, erhalten. Der Polybutadien-Latex hatte eine Glastemperatur von etwa -80°C. Die mittels der Ultrazentrifuge bestimmte Teilchengrößenverteilung (integrale Massenverteilung) ist durch folgende Werte charakterisiert:

$d_{10}$-Wert 0,06 μm
$d_{50}$-Wert 0,08 μm
$d_{90}$-Werte 0,105 μm

255 Teile der Polybutadien-Emulsion wurde bei 65°C mit 74 Teilen Wasser verdünnt. Zur Agglomeration des Latex wurden 30 Teile einer wäßrigen Dispersion eines Ethylacrylat-Copolymeren zudosiert, das 96 Gew.-% Ethylacrylat und 4 Gew.-% Methylacrylamid einpolymerisiert enthielt. Der Feststoffgehalt dieser Dispersion betrug 10 Gew.-%, bezogen auf die Dispersion. Nach der Agglomeration wurde ein Polybutadien-Latex erhalten, in dem etwa 80 Zahlenprozent der Teilchen im nicht agglomerierten Zustand vorlagen. Die mit der Ultrazentrifuge gemessene Teilchengrößenverteilung (integrale Massenverteilung) des agglomerierten Polybutadien-Latex ist durch folgende Werte charakterisiert:

$d_{10}$-Wert 0,070 μm
$d_{50}$-Wert 0,238 μm
$d_{90}$-Wert 0,323 μm

Die so erhaltene Polybutadien-Emulsion wurde auf 70°C aufgeheizt und bei dieser Temperatur mit 0,13 Teilen Kaliumpersulfat (in Form einer 3-prozentigen wäßrigen Lösung), 0,02 Teilen tert.-Dodecylmercaptan und 11 Teilen eines Gemisches von Styrol und Acrylnitril versetzt. Das Gewichtsverhältnis von Styrol zu Acrylnitril in diesem Gemisch betrug 7:3. 10 Minuten nach Beginn der Pfropfreaktion wurde innerhalb von 2 ♂ Stunden ein Gemisch aus weiteren 39 Teilen Styrol, 17 Teilen Acrylnitril und 0,1 Teilen tert.-Dodecylmercaptan zudosiert. Dabei stellt sich eine Reaktionstemperatur von 75°C ein. Nach Beendigung der Monomerenzugabe wurde die Reaktion noch 1 Stunde fortgesetzt und das entstandene Pfropfpolymerisat dann mittels einer Calciumchlorid-Lösung bei 95°C gefällt und abgesaugt. Die feuchten Krümel des gepfropften Polybutadiens wurden mittels eines Extruders in die Schmelze eines Styrol Styrol-Acrylnitril-Copolymeren eingearbeitet, das 65 Gew.-% Styrol und 35 Gew.-% Acrylnitril einpolymerisiert enthielt. Das gepfropfte Polybutadien wurde dabei mit dem Styrol-Acrylnitril-Copolymeren im Gewichtsverhältnis von 3:7 gemischt.

**Beispiel 5B (Komponente B31)**

Ein ASA-Polymer (Luran® S 778T der BASF AG) erhältlich gemäß DE-A 12 60 135 (Vergleichsbeispiel 1a):
100 Teile Butylacrylat, 50 Teile Emulgator H (20 %ig), 3 Teile Kaliumpersulfat und 1480 Teile destilliertes Wasser wurden unter Rühren auf 60°C erwärmt. Nach dem Anspringen der Polymerisation wurden 880 Teile Butylacrylat und 20 Teile Butandioldiacrylat im Verlauf von ca. 1 Stunde zudosiert. Man polymerisiert 2 Stunden nach und erhielt eine ~ 40%ige Polymerisatdispersion (A).
465 Teile Styrol und 200 Teile Acrylnitril wurden in Gegenwart von 2500 Teilen der Dispersion (A), 2 Teile Kaliumpersulfat, 1,33 Teile Lauroylperoxid und 1005 Teile destilliertes Wasser unter Rühren bei 60°C polymerisiert. Man erhielt eine 40%ige Dispersion, aus der das Festprodukt durch Zusatz einer 0,5%igen Calciumchloridlösung ausgefällt, mit Wasser gewaschen und getrocknet wurde.
1490 Teile des getrockneten Polymerisats wurden mit 2090 Teilen eines Copolymerisats aus 68 Teilen Styrol und 32 Teilen Acrylnitril bei ~ 220°C in einem Schneckenextruder gemischt.

**Beispiel 6B (Komponente B32)**

Es wurde ein durch Lösungspolymerisation hergestelltes statistisches Copolymer aus 75 Gew.-% Styrol, 24 Gew.-% Acrylnitril und 1 Gew.-% Maleinsäureanhydrid mit VZ = 80 mllg (nach DIN 53 727, gemessen als 0,5%ige Lösung in Chloroform) eingesetzt.

**Beispiel 7B (Komponente B1a)**

Unter Stickstoffatmosphäre wurden 4,593 kg Dichlordiphenylsulfon und 3,652 kg Bisphenol A in 29 kg N-Methylpyrrolidon gelöst und mit 2,923 kg wasserfreiem Kaliumcarbonat versetzt. Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt. Nach dieser Zeit wurden 235 g 4-Fluorphthalsäureanhydrid der Mischung zugesetzt und die Reaktion 0,2 h bei 190°C weitergeführt. Nach der Zugabe von 40 kg N-Methylpyrrolidon wurden die anorgaischen Bestandteile abfiltriert, anschließend wurde das Polymer durch Fällung in Wasser isoliert. Nach 3-maliger Extraktion mit Wasser wurde das Produkt bei 160°C unter vermindertem Druck getrocknet. Es wurde ein weißes Material erhalten. Der Gehalt an Phthalsäureanhydridendgruppen betrug 0,76 Gew.-%, die Viskositätszahl des Polyarylenethers betrug 53,4 ml/g.

**Beispiel 8B (Komponente B1a)**

Unter Stickstoffatmosphäre wurden 4,593 kg Dichlordiphenylsulfon, 4,002 kg Dihydroxydiphenylsulfon in 29 kg N-Methylpyrrolidon gelöst und mit 2,923 kg wasserfreiem Kaliumcarbonat versetzt. Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt. Nach dieser Zeit wurden 235 g 4-Fluorphthalsäureanhydrid der Mischung zugesetzt und die Reaktion 0,2 h bei 190°C weitergeführt. Nach Zugabe von 40 g N-Methylpyrrolidon wurden die anorganischen Bestandteile abfiltriert, anschließend wurde das Polymer durch Fällung in Wasser isoliert. Nach 3-maliger Extraktion mit Wasser wurde das Produkt bei 160°C unter vermindertem Druck getrocknet. Es wurde ein weißes Material erhalten. Der Gehalt an Phthalsäureanhydridendgruppen betrug 0,83 Gew.-%, die Viskositätszahl des Polyarylenethers betrug 49,7 mllg.

**Beispiel 9B (Komponente B1b)**

Als Polyarylether B1b wurde Ultrason® S 2010 (Handelsprodukt der BASF AG) verwendet. Diese Produkt ist charakterisiert durch eine Viskositätszahl von 56 mllg, gemessen in 1%-iger NMP-Lösung bei 25°C und aufgebaut aus Bisphenol A und 4,4'-Dichlordiphenylsulfon. Es weist im wesentlichen Chlor- und Methoxyendgruppen auf.

**Beispiel 10B (Komponente B1b)**

Als Polyarylether B1b wurde Ultrason® E 1010 (Handelsprodukt der BASF AG) verwendet. Dieses Produkt ist charakterisiert durch eine Viskositätszahl von 49 ml/g, gemessen in 1%-iger NMP-Lösung bei 25°C, und aufgebaut aus 4,4'-Dihydroxydiphenylsulfon und 4,4'-Dichlordiphenylsulfon. Es weist im wesentlichen Chlor- und Methoxyendgruppen auf.

**Beispiel 1C (Komponente C1)**

Es wurde ein mit 0,4 Gew.-% Maleinsäureanhydrid modifizierter EP-Kautschuk eingesetzt (Exxelor® VA 1803 von Exxon).

**Beispiel 2C (Komponente C2)**

Es wurde ein Styrol-Butadien-Blockcopolymer (Tufprene® A von Asahi Chem.) mit einem Styrolgehalt von 41 Gew.-% und einer Shore A-Härte von 87 (gemäß DIN 53505) eingesetzt.

**Beispiel 1D (Komponente D)**

Es wurden Glasfasern (CS 3540 von PPG) eingesetzt.

**Beispiel 1E (Komponente E)**

Es wurde Ruß (Printex® EP 60 von Degussa) eingesetzt.

Die vorstehend beschriebenen Komponenten wurden gemäß den in Tabellen 1, 2, 3 und 4 angegebenen Mengen auf einem Zweischneckenextruder (ZSK 30 von Werner & Pfleiderer) bei 280°C beziehungsweise 300 bis 350°C (Tabelle 4) konfektioniert. Die Blends wurden nach dem Extrudieren durch ein Wasserbad geleitet, granuliert und getrocknet. Sie wurden schließlich zu den entsprechenden Formkörpern verarbeitet, wobei die Temperatur der Blends 310°C beziehungsweise 350°C bei einer Formtemperatur von 100°C betrug.

Die Zusammensetzungen sind in den nachstehenden Tabellen 1 bis 4 angegeben.

**Tabelle 1** Zusammensetzungen der Polyphenylenether-Blends und Vergleichsblends in Gew.-% der Komponenten A bis E aus den angegebenen Beispielen

| Blend | A | B | C1 | C2 | D | E |
|---|---|---|---|---|---|---|
| 1 | 39/1A | 25/B1 | - | 5/2C | 30/1D | 1/1E |
| 2 | 39/2A | 25/B1 | - | 5/2C | 30/1D | 1/1E |
| 3 | 34/1A | 25/B1 | 5/1C | 5/2C | 30/1D | 1/1E |
| 4 | 39/2A | 30/B1 | - | - | 30/1D | 1/1E |
| 5 | 49/2A | 30/B1 | - | - | 20/1D | 1/1E |
| V1 | 39/V1A | 25/B1 | - | 5/2C | 30/1D | 1/1E |
| V2 | 39/V2A | 25/B1 | - | 5/2C | 30/1D | 1/1E |
| V3 | 39/V3A | 25/B1 | - | 5/2C | 30/1D | 1/1E |

**Tabelle 2** Zusammensetzungen des Polyolefin-Blends und der Vergleichsblends in Gew.-% der Komponenten A bis E aus den angegebenen Beispielen

| Blend | A | B21 | B22 | C1 | D | E |
|---|---|---|---|---|---|---|
| 6 | 40/A1 | 20/2B | 5/3B | 4/1C | 30/1C | 1/1E |
| V4 | 40/V1A | 20/2B | 5/3B | 4/1C | 30/1D | 1/1E |
| V5 | 40/V2A | 20/2B | 5/3B | 4/1C | 30/1D | 1/1E |
| V6 | 40/V3A | 20/2B | 5/3B | 4/1C | 30/1D | 1/1E |
| V7 | 40/V4A | 20/2B | 5/3B | 4/1C | 30/1D | 1/1E |
| V8 | 40/V5A | 20/2B | 5/3B | 4/1C | 30/1D | 1/1E |

**Tabelle 3** Zusammensetzungen der ABS- und ASA-Blends und- Vergleichsblends in Gew.-% der Komponenten A bis E aus den angegebenen Beispielen

| Blend | A | B31 | B32 | C1 | D | E |
|---|---|---|---|---|---|---|
| 7 | 40/1A | 30/4B | - | - | 30/1D | - |
| 8 | 40/2A | 30/4B | - | - | 30/1D | - |
| 9 | 35/1A | 30/5B | - | 5/1C | 30/1D | - |
| 10 | 35/1A | 25/5B | 5/6B | 5/1C | 30/1D | - |
| 11 | 39/2A | 30/5B | 5/6B | 5/1C | 20/1D | 1/1E |
| V9 | 40/V1A | 30/4B | - | - | 30/10 | - |
| V10 | 40/V2A | 30/4B | - | - | 30/1D | - |
| V11 | 40/V3A | 30/4B | - | - | 30/1D | - |
| V12 | 40/V4A | 30/4B | - | - | 30/1D | - |

**Tabelle 4** Zusammensetzungen der Polyarylenether-Blends und -Vergleichsblends in Gew.-% der Komponenten A bis E aus den angegebenen Beispielen

| Blend | A | B1a | B1b | C | D | E |
|---|---|---|---|---|---|---|
| 12 | 28/1A | - | 41/9B | - | 30/1D | 1/1E |
| 13 | 28/2A | - | 41/9B | - | 30/1D | 1/1E |
| 14 | 28/1A | 10/7B | 31/9B | - | 30/1D | 1/1E |
| 15 | 24/1A | 10/7B | 31/9B | 4/1C | 30/1D | 1/1E |
| 16 | 28/2A | - | 41/10B | - | 30/1D | 1/1E |
| 17 | 28/2A | 10/8B | 31/10B | - | 30/1D | 1/1E |
| V13 | 28/V1A | - | 41/9B | - | 30/1D | 1/1E |
| V14 | 28/V2A | - | 41/9B | - | 30/1D | 1/1E |
| V15 | 28/V3A | - | 41/9B | - | 30/1D | 1/1E |
| V16 | 28/V2A | - | 41/10B | - | 30/1D | 1/1E |

Zur Prüfung der Eigenschaften wurde für die Formmassen ein Zugversuch gemäß ISO 527 durchgeführt. Die Glanzbestimmung als Maß für die Güte der Oberfläche erfolgte nach DIN 67530, wobei Formkörper gemäß ISO 6603-2

verwendet wurden. Je nach Qualität wurde die Oberfläche mit gut (+), noch befriedigend (0) oder mangelhaft (-) klassifiziert. Die ungekerbte Charpy-Schlagzähigkeit (aN) wurde nach ISO 179 ermittelt. Die Werte wurden vor und nach Wärmelagerung der Prüfkörper an Luft bei 110°C bestimmt.

Für die Polyarylenether wurden zudem folgende Messungen durchgeführt:

Die Wärmebeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleistäben ermittelt. Die Schlagzähigkeit der Produkte wurde an ISO-Stäben nach ISO 179 leU bestimmt. Die Steifigkeit (E-Modul) wurde nach DIN 53, 457, die Zugfestigkeit nach DIN 53 455 ermittelt. Die Werte wurden vor und nach Wärmelagerung der Prüfkörper an Luft bei 110°C bestimmt. Der Verzug wurde am Testkästchen ermittelt, dazu wurde an der offenen Seite die Breite am Ende und in der Mitte des Testkästchen bestimmt, die Differenz dieser Werte wurde durch 2 dividiert. Es wurden jeweils 5 Probekörper untersucht, in Tabelle 8 ist der Mittelwert angegeben.

**Tabelle 5** Eigenschaften der Polyphenylenether-Blends und Vergleichsblends

| Blend | Reißdehnung [%] | E-Modul [N/mm$^2$] | Oberflächenqualität | aN [kJ/m$^2$] spritzfrisch | aN [kJ/m$^2$] nach 30 Tagen | aN [kJ/m$^2$] nach 60 Tagen |
|---|---|---|---|---|---|---|
| 1 | 3,0 | 9050 | + | 55 | 34 | 25 |
| 2 | 2,8 | 8900 | + | 52 | 35 | 23 |
| 3 | 3,5 | 8450 | + | 62 | 38 | 27 |
| 4 | 2,1 | 9200 | + | 45 | 33 | 23 |
| 5 | 3,3 | 7600 | + | 58 | 37 | 26 |
| V1 | 2,2 | 8700 | - | 50 | 21 | 16 |
| V2 | 2,8 | 9000 | - | 48 | 22 | 17 |
| V3 | 2,4 | 8750 | 0 | 50 | 18 | 16 |

**Tabelle 6** Eigenschaften des Polyolefin-Blends und der Vergleichsblends

| Blend | Reißdehnung [%] | E-Modul [N/mm$^2$] | Oberflächenqualität |
|---|---|---|---|
| 6 | 4,2 | 7750 | + |
| V4 | 3,5 | 7800 | 0 |
| V5 | 3,9 | 7700 | 0 |
| V6 | 4,3 | 7550 | 0 |
| V7 | 3,1 | 7800 | 0 |
| V8 | 4,2 | 7600 | 0 |

**Tabelle 7** Eigenschaften der ABS- und ASA-Blends und- Vergleichsblends

| Blend | Reißdehnung [%] | E-Modul [N/mm$^2$] | Oberflächenqualität |
|---|---|---|---|
| 7 | 3,9 | 8250 | + |
| 8 | 3,7 | 8000 | + |
| 9 | 4,3 | 7600 | + |
| 10 | 4,6 | 7700 | + |
| 11 | 4,4 | 6400 | + |
| V9 | 3,7 | 8100 | - |
| V10 | 4,2 | 8100 | - |
| V11 | 4,0 | 7900 | 0 |
| V12 | 3,5 | 8050 | 0 |

**Tabelle 8** Eigenschaften der Polyarylenether-Blends und -Vergleichsblends

| Blend | Vicat B [°C] | aN [kJ/m²] | E-Modul [N/mm²] | $\sigma_R$ [N/mm²] | EModul nach Tagen [N/-mm²] | $\sigma_R$ nach Tagen [N²] | Oberflächen-qualität | Verzug [cm] |
|---|---|---|---|---|---|---|---|---|
| 12 | 181 | 47 | 9600 | 173 | 9500 | 154 | + | 0,03 |
| 13 | 181 | 45 | 9450 | 171 | 9400 | 151 | + | 0,03 |
| 14 | 181 | 51 | 9500 | 182 | 9400 | 161 | + | 0,02 |
| 15 | 179 | 59 | 9100 | 172 | 9000 | 150 | + | 0,03 |
| 16 | 205 | 43 | 9700 | 176 | 9550 | 155 | + | 0,02 |
| 17 | 205 | 48 | 9650 | 184 | 9400 | 163 | + | 0,02 |
| V13 | 180 | 41 | 9300 | 164 | 9200 | 131 | - | 0,05 |
| V14 | 181 | 38 | 9100 | 165 | 9000 | 126 | - | 0,05 |
| V15 | 180 | 37 | 9200 | 159 | 8900 | 121 | 0 | 0,05 |
| V16 | 203 | 38 | 9400 | 161 | 9000 | 129 | - | 0,04 |

**Patentansprüche**

1. Formmasse, umfassend die Komponenten A, B und gegebenenfalls die Komponenten C bis E, deren Gesamtgewicht 100 Gew.-% ergibt:

   a: 5 bis 95 Gew.-% eines statistischen Copolyamids als Komponente A aus

   a1: 95,1 bis 99,9 Gew.-% Komponente A1 aus äquimolaren Mengen mindestens eines linearen aliphatischen Diamins und mindestens einer linearen aliphatischen Dicarbonsäure
   a2: 0,1 bis 4,9 Gew.-% Komponente A2 aus äquimolaren Mengen mindestens eines linearen aliphatischen Diamins und Isophthalsäure

   b: 5 bis 95 Gew.-% einer von Komponente A unterschiedlichen Copolymer-Komponente B, ausgewählt aus:

   b1: Komponente B1 aus mindestens einem gegebenenfalls modifizierten Polyarylenether, oder
   b2: Komponente B2 aus 60 bis 99 Gew.-% mindestens eines Polyolefinhomo- oder -copolymerisats als Komponente B21 und 1 bis 40 Gew.-% mindestens eines modifizierten Polyolefinhomo- oder -copolymerisats als Komponente B22, oder
   b3: Komponente B3 aus 70 bis 100 Gew.-% mindestens eines SAN-, ABS- oder ASA-Polymerisats als Komponente B31 und 0 bis 30 Gew.-% mindestens eines modifizierten SAN-, ABS-oder ASA-Polymerisats als Komponente B32

   c: 0 bis 20 Gew.-% mindestens eines Schlagzähmodifiers als Komponente C
   d: 0 bis 50 Gew.-% mindestens eines Füllstoffes als Komponente D
   e: 0 bis 20 Gew.-% üblicher Zusatzstoffe als Komponente E.

2. Formmasse nach Anspruch 1, dadurch gekennzeichnet, daß in Komponente A der Anteil der Komponente A1 95,1 bis 98,5 Gew.-% und der Anteil der Komponente A2 1,5 bis 4,9 Gew.-% beträgt.

3. Formmasse nach Anspruch 1 oder 2, dadurch gekennzeichnet, daß Komponente A eine Viskositätszahl von 70 bis 300 aufweist.

4. Formmasse nach einem der Ansprüche 1 bis 3, dadurch gekennzeichnet, daß der Anteil der Komponente B 5 bis 90 Gew.-% und der Anteil der Komponente D 5 bis 50 Gew.-% beträgt.

5. Formmasse nach einem der Ansprüche 1 bis 4, dadurch gekennzeichnet, daß die Formmasse als Komponente D ein delaminiertes Schichtsilikat enthält.

6. Formmasse nach einem der Ansprüche 1 bis 5, dadurch gekennzeichnet, daß Komponente B1 ein Polyphenylenether B1c ist, der aufgebaut ist durch Umsetzung von

   b11: 70 bis 99,95 Gew.-% mindestens eines unmodifizierten Polyphenylenethers als Komponente B11,
   b12: 0 bis 29,95 Gew.-% mindestens eines Polymers aus vinylaromatischen Monomeren als Komponente B12,
   b13: 0,05 bis 30 Gew.-% mindestens eines mit Komponenten B11 und B12 umsetzbaren Monomeren, das durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam- oder Halogenbenzylgruppe modifiziert ist, als Komponente B13,
   b14: 0 bis 5 Gew.-% mindestens eines Radikalstarters als Komponente B14,

   wobei die Summen der Mengen der Komponenten B11, B13 und gegebenenfalls B12 und/oder B14 100 Gew.-% ergibt.

7. Verfahren zur Herstellung von Formmassen nach einem der Ansprüche 1 bis 6 durch

   Lösen der Komponenten A1 und A2 in Wasser,

   Kondensation des so erhaltenen wäßrigen Gemisches bei einem Druck in einem Bereich von 1 bis 20 bar und einer Temperatur im Bereich von 200 bis 300°C zu einem Präpolymer,

Nachkondensation des so erhaltenen Präpolymers durch Festphasenkondensation mit überhitztem Wasserdampf bei einem Druck im Bereich von 0 bis 5 bar und einer Temperatur im Bereich von 5 bis 50°C unterhalb des Schmelzpunktes und

Mischen des Copolyamids A mit den Komponenten B und gegebenenfalls C, D und/oder E.

**8.** Verwendung einer Formmasse nach einem der Ansprüche 1 bis 6 zur Herstellung von Formkörpern, Fasern oder Folien.

**9.** Formkörper, Fasern oder Folien aus einer Formmasse nach einem der Ansprüche 1 bis 6.

**Claims**

**1.** A molding composition comprising components A, B and, if desired, components C to E, the total weight of which is 100% by weight:

a: as component A, from 5 to 95% by weight of a random copolyamide made from

a1: from 95.1 to 99.9% by weight of component A1 made from equimolar amounts of at least one linear aliphatic diamine and at least one linear aliphatic dicarboxylic acid
a2: from 0.1 to 4.9% by weight of component A2 made from equimolar amounts of at least one linear aliphatic diamine and isophthalic acid

b: from 5 to 95% by weight of a copolymer component B, different from component A, selected from:

b1: component B1 made from at least one, if desired modified, polyarylene ether, or
b2: component B2 made from, as component B21, from 60 to 99% by weight of at least one polyolefin homo- or copolymer and, as component B22, from 1 to 40% by weight of at least one modified polyolefin homo- or copolymer, or
b3: component B3 made from, as component B31, from 70 to 100% by weight of at least one SAN, ABS or ASA polymer and, as component B32, from 0 to 30% by weight of at least one modified SAN, ABS or ASA polymer

c: as component C, from 0 to 20% by weight of at least one impact modifier
d: as component D, from 0 to 50% by weight of at least one filler
e: as component E, from 0 to 20% by weight of customary additives.

**2.** A molding composition as claimed in claim 1, wherein, in component A, the proportion of component A1 is from 95.1 to 98.5% by weight and the proportion of component A2 is from 1.5 to 4.9% by weight.

**3.** A molding composition as claimed in claim 1 or 2, wherein component A has a viscosity number of from 70 to 300.

**4.** A molding composition as claimed in any one of claims 1 to 3, wherein the proportion of component B is from 5 to 90% by weight and the proportion of component D is from 5 to 50% by weight.

**5.** A molding composition as claimed in any one of claims 1 to 4, wherein the molding composition contains, as component D, a delaminated phyllosilicate.

**6.** A molding composition as claimed in any one of claims 1 to 5, wherein component B1 is a polyphenylene ether B1c which is built up by reacting

b11: as component B11, from 70 to 99.95% by weight of at least one unmodified polyphenylene ether,
b12: as component B12, from 0 to 29.95% by weight of at least one polymer of vinylaromatic monomers,
b13: as component B13, from 0.05 to 30% by weight of at least one monomer capable of reacting with components B11 and B12 and modified by the incorporation of at least one carbonyl, carboxy, anhydride, amide, imide, carboxylic ester, carboxylate, amino, hydroxyl, epoxy, oxazoline, urethane, urea, lactam or halobenzyl group,

b14: as component B14, from 0 to 5% by weight of at least one free-radical initiator,

where the totals of the amounts of components B11, B13 and, if present, B12 and/or B14, are 100% by weight.

**7.** A process for preparing a molding composition as claimed in any one of claims 1 to 6 by

dissolving components A1 and A2 in water,

condensing the resultant aqueous mixture at a pressure in a range from 1 to 20 bar and at from 200 to 300°C, to give a prepolymer,

post-condensation of the resultant prepolymer by solid phase condensation with superheated steam at a pressure in the range from 0 to 5 bar and at a temperature which is from 5 to 50°C below the melting point and

mixing the copolyamide A with components B, and if desired C, D and/or E.

**8.** The use of a molding composition as claimed in any one of claims 1 to 6 for producing a molding, a fiber or a film.

**9.** A molding, a fiber or a film made from a molding composition as claimed in any one of claims 1 to 6.

**Revendications**

**1.** Masse de moulage, comprenant les composants A, B et éventuellement les composants C à E, dont le poids total donne 100% en poids :

a: 5 à 95% en poids d'un copolyamide statistique comme composant A, à base de

a1 : 95,1 à 99,9% en poids de composant A1 à base de quantités équimolaires d'au moins une diamine aliphatique linéaire et d'au moins un acide dicarboxylique aliphatique linéaire,
a2 : 0,1 à 4,9% en poids de composant A2 à base de quantités équimolaires d'au moins une diamine aliphatique linéaire et d'acide isophtalique,

b : 5 à 95% en poids d'un composant B à base d'un copolymère différent du composant A, choisi parmi :

b1 : un composant B1 à base d'au moins un éther polyarylénique éventuellement modifié, ou
b2 : un composant B2 à base de 60 à 99% en poids d'au moins un homopolymère ou copolymère polyoléfinique, comme composant B21, et de 1 à 40% en poids d'au moins un homopolymère ou copolymère polyoléfinique modifié, comme composant B22, ou
b3 : un composant B3 à base de 70 à 100% en poids d'au moins un polymère SAN, ABS ou ASA, comme composant B31, et de 0 à 30% en poids d'au moins un polymère SAN, ABS ou ASA modifié, comme composant B32,

c : 0 à 20% en poids d'au moins un modificateur de résilience, comme composant C,
d : 0 à 50% en poids d'au moins une matière de remplissage, comme composant D,
e : 0 à 20% en poids d'additifs courants, comme composant E.

**2.** Masse de moulage suivant la revendication 1, caractérisée en ce que, dans le composant A, la fraction du composant A1 est de 95,1 à 98,5% en poids et la fraction du composant A2 de 1,5 à 4,9% en poids.

**3.** Masse de moulage suivant l'une des revendications 1 et 2, caractérisée en ce que le composant A présente un indice de viscosité de 70 à 300.

**4.** Masse de moulage suivant l'une des revendications 1 à 3, caractérisée en ce que la fraction du composant B est de 5 à 90% en poids et la fraction du composant D de 5 à 50% en poids.

**5.** Masse de moulage suivant l'une des revendications 1 à 4, caractérisée en ce que la masse de moulage contient, comme composant D, un silicate lamellaire délaminé.

**6.** Masse de moulage suivant l'une des revendications 1 à 5, caractérisée en ce que le composant B1 est un éther polyphénylénique B1c, qui est constitué par réaction de

b11 :70 à 99,95% en poids d'au moins un éther polyphénylénique non modifié, comme composant B11,
b12:0 à 29,95% en poids d'au moins un polymère de monomères vinylaromatiques, comme composant B12,
b13 : 0,05 à 30% en poids d'au moins un monomère qui est capable de réagir avec des composants B11 et B12 et qui est modifié par incorporation d'au moins un groupe carbonyle, acide carboxylique, anhydride d'acide, amide d'acide, imide d'acide, ester d'acide carboxylique, carboxylate, amino, hydroxyle, époxy, oxazoline, uréthanne, urée, lactame ou halogénobenzyle, comme composant B13,
b14:0 à 5% en poids d'au moins un amorceur radicalaire, comme composant B14,

les sommes des quantités des composants B11, B13 et éventuellement B12 et/ou B14 donnant 100% en poids.

**7.** Procédé de préparation de masses de moulage suivant l'une des revendications 1 à 6, par

dissolution des composants A1 et A2 dans de l'eau,
condensation du mélange aqueux ainsi obtenu à une pression de l'ordre de 1 à 20 bars et à une température de l'ordre de 200 à 300°C pour former un prépolymère,
condensation ultérieure du prépolymère ainsi obtenu par condensation de phase solide avec de la vapeur d'eau surchauffée à une pression de l'ordre de 0 à 5 bars et à une température de l'ordre de 5 à 50°C en dessous du point de fusion, et
mélange du copolyamide A avec les composants B et éventuellement C, D et/ou E.

**8.** Utilisation d'une masse de moulage suivant l'une des revendications 1 à 6, pour la fabrication de corps façonnés, de fibres ou de feuilles.

**9.** Corps façonnés, fibres ou feuilles à base d'une masse de moulage suivant l'une des revendications 1 à 6.